# EUROPÄISCHE PATENTSCHRIFT

(11) **EP 1 867 904 B1**
(45) Veröffentlichungstag und Bekanntmachung des Hinweises auf die Patenterteilung: **14.11.2012**
(21) Anmeldenummer: 06017206.1
(22) Anmeldetag: 18.08.2006
(51) Int. Cl.: F16L 5/10, F16L 7/02, F16L 59/10, H02G 15/013

(54) **Mauerwerk-, Rohr-, Kanal-Abdichtung**
Sealing device for wall lead-throughs, pipes and ducts
Dispositif d'étanchéité pour un passage de conduite à travers une ouverture murale, un tuyau ou une conduite

(30) Priorität: 17.06.2006 DE 102006027888
(43) Veröffentlichungstag der Anmeldung: 19.12.2007
(73) Patentinhaber: Fibre Optics CT GmbH, Consulting & Testing, 70437 Stuttgart (DE)
(72) Erfinder: Wolf, Roland, 70437 Stuttgart (DE)
(74) Vertreter: Jeck, Anton

(56) Entgegenhaltungen:
- EP-A- 1 686 670
- WO-A-93/14335
- DE-A1- 10 341 005
- GB-A- 2 151 723
- US-A- 3 038 732
- US-A1- 2001 045 699

## Beschreibung

Die Erfindung betrifft eine Vorrichtung zum gas- und druckwasserdichten Verschließen von Hohlräumen zwischen Mauerdurchbrüchen und Mantel- und Medienrohren sowie von Hohlräumen zwischen Kabelkanälen, Futterrohr (Hülse) und Mehrfach-Medienrohren oder Mehrfach-Kabeln und zur Abdichtung von Zwischenräumen bei Stellwänden, die zusätzlich zur abdichtenden Funktion eine brandabschottende Funktion einnehmen kann, gemäß dem Oberbegriff des Anspruchs 1 (GB 2 151 723 A).

Aus Patentanmeldung DE 689 20 883 T2 ist der Einsatz von Abdichtelementen zum Verschließen von Zwischenräumen bekannt, deren Abdichtmaterial im wesentlichen starre Teile aufweist, die durch Halteeinrichtungen, wie etwa Schrauben zusammengehalten werden. Nachteilig an diesem Verfahren ist das unwirtschaftliche Handling und die Kosten.

Eine der bekanntesten Abdichtungen zwischen Rohr und Mehrfachmedienrohr, sowie bei Mauerwerken zwischen Futterrohr (Hülse) zu Mehrfach-Medienrohren oder Mehrfach-Kabeln ist in der EP 0899 493 A1 und DE 197 36 494 A1 beschrieben. Diese Abdichtungen bestehen aus einem gummielastischen Material die beidseits des Dichtrings mit Presselementen ausgestaltet sind und durch den Dichtring Zugstäbe hindurchgeführt sind. Die Dichtpackung wird durch Anziehen von Muttern an den Zugstäben so zusammengepresst, dass die äußere Mantelfläche an der Innenfläche der Hülse satt und unter Spannung anliegt. Nachteilig an diesem Verfahren ist, dass auf einer Fläche von 19-35 mm ein extrem hoher punktueller Flächenanpressdruck auf dem Medienrohr aus Kunststoff oder dem Kabel lastet. Diese können hierdurch unter Zeitstand so eingebeult werden, dass Fließ- und übertragungstechnische Eigenschaften verändert werden und Spannungsrisse an der Beulstelle zum Bruch führen. Weitere Nachteile sind die hohen Materialkosten und das unwirtschaftliche Handling, da die Durchmesser der medienführenden Rohre/ Kabel vor der Montage exakt ermittelt werden müssen. Zum Abdichten von Rohren im Durchmesserbereich von 100 bis 250 mm stehen beispielsweise 46 Stück Abdichtelementgrößen zur Auswahl, welches zu hohen Lagerhaltungskosten führt.

DE 198 03 958 C1 zeigt eine Abdichtvorrichtung mit zwei beidseitig der Mauer angeordneten gegen die Mauer pressbaren Flanschen und Klötzen, die durch festes Verschrauben miteinander die Spannungseinrichtung kraftschlüssig auf dem Rohr fixieren. Nachteilig an diesem Verfahren sind wiederum das unwirtschaftliche Handling und die Kosten.

Aus der Patentanmeldung DE 41 005.8 (als DE 103 41 005 A1 veröffentlicht) ist der Einsatz von Abdichtelementen zum Verschließen von Zwischenräumen bei belegten Kabelschutzrohren oder Kabelverbindungs- und/oder Aufteilmuffen in Fernmeldeanlagen bekannt.

Eines der bekanntesten Abdichtelemente für Zwischenräume von Kabelkanal und Rohren mit Innendurchmesser von 50 bis 200 mm ist in der DE 41 056 25 C2 und DE 692 20 786T2 beschrieben. Die Abdichtung wird hier aus einem Kunststofflaminat mit Metalleinlage realisiert, welches durch Luftdruck von ca. 300 KPa gefüllt und zu einem Dichtkörper geformt wird. Dieses Abdichtelement bleibt im Anwendungsbereich jedoch auf Kabel- und Rohrabdichtungen mit geringen Rohr-Innendurchmesser und Druckdifferenzen zum Kabel von 35 kPa - 70 kPa eingeschränkt. Dieser Umstand ist durch die mittlere Breite des Abdichtelements von 120 mm und das Sondenloch gegeben. Desweiteren hat das Abdichtsystem eine beschränkte Brauchbarkeitsdauer, die dadurch bedingt ist, dass der anfängliche Fülldruck von 300 Kpa des Abdichtelements durch Kriechmodule der Abdichtelement-Dichtmassen, der auszufüllenden Kabel-Hohlräume, das Beulverhalten von Kunststoffrohren, des verwendeten Abdichtelement-Werkstoffes und der im Zeitstand bedingten, im Verhältnis guten Leckrate von ≤ 4,4 x 10⁻⁶ mbar 1/sec (He) abnimmt und zur Undichtheit des Sondenlochs und somit des Abdichtsystems führt.
Ein weiterer Nachteil ist, dass das Abdichtelement an seiner mit dem Kabelschutzrohr in Kontakt stehenden Außenfläche und mit seiner Innenfläche mit den im Kabelschutzrohr eingelegten Kabeln verklebt und somit einen erheblichen Arbeitsaufwand beim Auswechseln des Abdichtelements, z.B. bei neuer Kabelbelegung, verursacht. Ein großer Nachteil ist, dass das Abdichtelement kein Druck- Ein-/ Auslaßventil besitzt und somit weder zu einem späteren Zeitpunkt nachbefüllt werden kann, noch wieder verwendbar ist. Das Einfüllventil ist bei diesem Element in Form eines Schlauches ausgebildet, der nach der Erstbefüllung beim Herausziehen automatisch eine Sonde abdichtet. Ein zweites Einfüllventil ist nicht vorgesehen,

DE 689 20 883 T2 zeigt eine Abdichteinrichtung deren Abdichtmaterial im wesentlichen starre Teile aufweist, die durch Halteeinrichtungen, wie etwa Schrauben zusammengehalten werden. Nachteilig an diesem Verfahren ist das unwirtschaftliche Handling und die Kosten.

DE 37 28 009 A1 zeigt eine Abdichtvorrichtung für Wanddurchführungen, die im wesentlichen aus einem Druckgas-Ventilanschluß mit Schlauchanschluß, Rückschlagventil zum Einbringen eines expansionsfähigen elastisch aushärtenden Schaumstoff-Füllmediums oder einer Brechkapsel im Inneren des Beutels besteht. Nachteilig ist hierbei, dass dieser Hohlkörper aus zwei koaxialen Folienschlauchabschnitten besteht, deren Randabschnitte durch Klebe- oder Schweißtechnik miteinander verbunden sind und die dadurch keine hohen Scherkräfte standhalten.
Ein weiterer Nachteil bei diesem System mit Brechkapsel ist, dass bei einem Abdicht- elementbauteil die Druckdifferenz zwischen einem oder mehreren abzudichtenden Kabeln entweder zu niedrig oder zu hoch ist und demzufolge entweder zur Undichtheit des Abdichtsystems oder zur Einbeulung und Schädigung der abzudichtenden Kabel oder Rohre führt.

Die Aufgabe der Erfindung besteht darin, eine Abdichtvorrichtung gemäß der im Oberbegriff des Anspruchs 1 genannten Art zu schaffen, die zum Abdichten der Hohlräume zwischen Mauerdurchbrüchen und Mantel- und Medienrohren, zwischen Kabelkanälen/ Futterrohren (Hülse) und Kabeln/ Rohren, sowie von Zwischenräumen von Stellwänden, bei Horizontalbohrungen (Unterquerungen) und bei Fernwärme-, Gas-, (Ab-)Wasser- oder Kabelkanälen gegen Gas und drückende Wasser geeignet ist und die je nach Anforderung zusätzlich mit einer brandabschottenden Funktion ausgerüstet sein kann.

Die Abdichtvorrichtung soll universell für ein breites Anwendungsspektrum geeignet sein und mittels hoher Flächenanpressdruckbreite nur einen geringen wirksamen Flächenanpressdruck aufbringen, um mechanische oder übertragungstechnische Eigenschaftsänderungen von Medienrohren oder Kabeln zu vermeiden. Desweiteren sollen mit dieser Abdichtvorrichtung Mauerdurchbrüche, Mantelrohre und Kanäle im Durchmesser bis etwa 600 mm und einer Länge von bis zu 10 m wirtschaftlich, ohne fremde Hilfe, schnell und zuverlässig abgedichtet werden können.
Die Abdichtung soll eine erhöhte Brauchbarkeitsdauer besitzen, mehrfach wieder verwendbar sein und auch unter Umweltbedingungen z.B. bei normalen Relativbewegungen von Rohren und Kabeln, Lagerung in Chemikaliengemischen pH2 bis pH12 und bei Temperaturwechselbeanspruchung noch zuverlässig abdichten.
Darüber hinaus soll die vorliegende Erfindung auch zum gas- und wasserdichten Verschließen von glatten oder gewellten Rund- oder Rechteck-Kabelkanälen, sowie von Zwischenräumen bei Stellwänden eingesetzt werden können und je nach Anforderung zusätzlich eine brandabschottende Funktion (z.B. bei der Gebäudeverkabelung) einnehmen können.

Diese Aufgaben werden mit den Merkmalen des Anspruchs 1 gelöst:

Bei den aus den Patentanmeldungen DE10341005.8, EP05001750.8, (als EP 1 686 670 erst am 02.08.2006 veröffentlicht) DE 102005039520.1, DE102005051013.2 und DE102006005101.7 bekannten Abdichtvorrichtungen wurde die Konstruktion des Abdichtelements so erweitert, dass eine universelle Abdichtung von Zwischenräumen möglich ist, das Abdichtelement eine erhöhte Brauchbarkeitsdauer besitzt, mehrfach wieder verwendet werden kann und darüber hinaus mit einer zusätzlichen brandabschottenden Funktion ausgerüstet sein kann.
Bei Verwendung als Abdichtvorrichtung zum gas- und druckwasserdichten Verschließen von Zwischenräumen enthält das als Flachschlauchkissen ausgebildete Abdichtelement je nach Anwendungsbereich auf der Außenseite ein Abdichtband, das aus einer Chemiefaser-Trägereinlage mit einer dem jeweiligen Anwendungsbereich optimierten Beschichtung versehen ist, besteht und welches die Außenseite des Flachschlauchkissens ganz oder teilweise bedeckt, um dieses vor Beschädigungen durch Unebenheiten oder Steine im Mauerwerk oder im Rohr zu schützen.
Für die Abdichtbänder wird je nach Anwendungsbereich eine Abdichtmasse aus Petrolat-Vaseline-Gemisch oder Petrolat-Bitumen-Gemisch gewählt, die beidseitig auf die Chemifaser-Trägereinlage des Abdichtbandes aufgebracht ist und die entweder eine geringe oder eine hohe Adhäsionskraft zum Flachschlauchkissen aufweist.
Auf der Innenseite des Flachschlauchkissens, die zum innenliegenden Kabel-/ Medienrohr zeigt, enthält das Flachschlauchkissen wiederum ein Abdichtband, welches das Flachschlauchkissen teilweise bedeckt, um eine völlige Abdichtung der Hohlräume zwischen Mauerdurchbruch, Mantel-, Medienrohr und Kabel etc. zu erzielen.

Bei mehrfach belegten Mauerdurchführungen, Mantelrohren oder Kabelkanälen ist jedes einzelne abzudichtende Medienrohr oder Kabel mit einem dauerhaft verklebenden Dichtband zu umschließen oder bei weniger als drei Kabeln/ Rohren mit dem Flachschlauchkissen zu umlegen.

Beim Abdichten von Standard-Mehrfachrohren oder -kabeln zur Mauerdurchführung oder Mantelrohr können die zu umschließenden Kabel und Rohre bauseitig mit einem elastischen, geteilten Dichtstern oder Dichtblock ausgefüllt werden, der je nach Anwendungsfall nicht dauerhaft mit den Kabeln oder Rohren verklebt.

Für eine gleichmäßige Druckverteilung wird das Flachschlauchkissen in zwei Lagen kreisförmig an der Innenseite des Mantelrohres oder der Mauerdurchführung eingelegt. Die Befüllung des Flachschlauchkissens erfolgt über ein oder zwei metallene Ventile, welche mit kunststoffbeschichteten metallenen Verlängerungen verbunden sind, die in das Flachschlauchkissen eingeschweißt sind. Bei Anwendungen wo das Flachschlauchkissen in zwei Lagen eingebracht wird, ist an der metallenen, kunststoffbeschichteten Ventilverlängerung im Inneren des Flachschlauchkissens eine perforierte Kunststoffleitung angebracht, die eine optimale Druckverteilung gewährleistet.

Die Ventilkonstruktion besteht aus einem metallenen Druckluftventil mit einer Kunststoff- und Wärmeschrumpfschlauch beschichteten metallenen Ventilverlängerung, die an einer oder an beiden Querseiten thermisch am Flachschlauchkissen eingeschweißt ist. Diese Ventilkonstruktion ermöglicht eine hohe Biegestabilität beim Ausformen der Ventilverlängerung und besitzt eine, nach dem heutigen Stand der Technik geringere Leckrate von < 5,8 x 10⁻⁸ mbar I/sec (Helium), womit die, dem heutigen Stand der Technik entsprechende Brauchbarkeitsdauer von 20 Jahren übertroffen wird.

Die erweiterte Brauchbarkeitsdauer der Erfindung wird dadurch gewährleistet, dass einerseits die Leckrate des Flachschlauchkissens zum Stand der Technik wesentlich verbessert wurde und andererseits der Druckverlust bedingt durch Diffusion durch das Flachschlauchkissen und dem Kriechmodul der Abdichtmaterialien durch Nachfüllen des Fülldrucks über das Ventil während der Anlagen-Wartungszyklen möglich ist.
Mit der Konstruktion der Erfindung kann einerseits erstmals der Flächenanpressdruck entsprechend dem Anforderungsprofil variabel auf einer Ringdrucklänge (Flachschlauchkissenbreite) von 40 bis ca. 300 mm und einem korrespondierenden Flächenanpressdruck von 15 und 40 N/cm² angepasst werden, welches einem Fülldruck des Flachschlauchkissens zwischen 1,5 bar und 5 bar entspricht.

Ein weiterer Vorteil der Konstruktion der Erfindung ist, dass bei gewünschter Befüllung des Flachschlauchkissen mit flüssigen oder pulverisierten Medien, das Flachschlauch-kissen mit zwei Stück metallenen, kunststoffbeschichteten Ventilverlängerungen ausgestattet ist, um die Medien ohne Luftpolster einbringen zu können. Die Befüllung mit flüssigen oder pulverisierten Medien kann aus Gründen der Abdichtung gewünscht sein, z.B. bei gewünschter Gewichtsbelastung beim Abdichten von Zwischenräumen bei Stellwänden.

Durch die Breite des Flachschlauchkissens von 100 bis über 370 mm ist erstmals ein hoher Reibschluß zwischen Mauerdurchbruch, Mantel- / Medienrohr und Kabel möglich und ein zum Abdichten von Hohlräumen benötigter Schlauch im Durchmesser von etwa 60 bis 236 mm ist herstellbar.

Beim Abdichten von rechteckigen Kabelkanälen wie sie z.B. bei Gebäudeverkabelungen eingesetzt werden oder bei Kabelkanälen, die mit Mehrfachrohren und/ oder mit mehr als einem Kabel belegt sind, wird im Bereich der Stellen, wo sich die Kabel und/ oder Kabelschutzrohre berühren, ein vorgeformter geteilter elastischer Dichtblock eingelegt.

Ein wesentlicher Vorteil der Konstruktion der Erfindung ist, dass das Flachschlauchkissen werkseitig mit einem brandabschottenden Material gefüllt sein kann, welches bei Temperaturen von etwa 200°C durch starkes Aufschäumen des Materials (bis Faktor 10 seiner ursprünglichen Dimension) den Zwischenraum vollständig abdichtet, und das aufgeplatzte Flachschlauchkissen dadurch wieder vollständig gegen Luft oder Gase abdichtet. Bei Abdichten von Rechteckkanälen oder Zwischenräumen von Stellwänden wird das Flachschlauchkissen in einer Lage längsförmig eingelegt, wobei das Flachschlauch-kissen hierbei so ausgebildet ist, dass das/die Füllventil(e) je nach Anwend- ungsbereich in der Längsschweißnaht oder an der Querseite angebracht sind. Die Querseiten sind durch zusätzliche Metall- oder Kunststoffverpressungen gegen die von Innen auf die Enden wirkenden Abscherkräfte bis 100 N/cm abgesichert.
Die Befüllung des Flachschlauchkissens erfolgt sinngemäß wie bei der Abdichtung von runden Kanälen über ein oder zwei metallene Ventile, welche mit einer, in das Flach-schlauchkissen eingeschweißten, metallenen, kunststoffbeschichteten Verlängerung verbunden sind.

Bei Verwendung als brandabschottende Abdichtung enthält das Flachschlauchkissen im Inneren und Außen um das Kissen herum elastische brandabschottende Bänder. Zusätzlich kann der Hohlraum zwischen Mauerdurchbruch und Medienrohr/ Kabelkanal oder Kabel unmittelbar vor oder nach dem Abdichtelement mit brandabschottendem Mittel aufgefüllt werden.
Beim Aufpumpen des Flachschlauchkissens mit Luft, Gas, Pulver oder einer Flüssigkeit werden die Abdichtbänder und die eingesetzten Dichtsterne oder Dichtblöcke in die Zwischenräume gepresst und das Kabel, Kabelschutzrohr, Kabelkanalrohr so verschlossen, dass eine unter Umweltbedingungen zug- und schubfeste Gas- und Wasserdruckdichtigkeit von mind. 0,5 bis 1,5 bar oder 5 bis 15 m Wassersäule erzielt wird und dennoch Relativbewegungen von Medienrohr und Kabel durch Setzen des Erdreichs, Temperaturwechsel, Bauarbeiten etc. abgefangen werden können. Die Demontage der wieder verwendbaren Vorrichtung ist je nach Anwendungsfall z.B. durch Ablassen der Füllung über das Ventil einfach möglich.

Zur Abdichtung von mit Kabeln oder Rohren belegten Mauerdurchführungen werden Abdichtbänder aus einer unverrottbaren Chemiefaser-Trägereinlage eingesetzt, die beidseitig mit einem unter Druck klebenden dauerplastischen Kunststoffgemisch beschichtet sind. Mindestens eine dieser Dichtbandseiten besitzt eine nicht lösbare, hochflexible Deckfolie um eine dauerhafte Verklebung ohne Druckbeaufschlagung zwischen den Dichtbändern zu garantieren. Die Dichtbänder mit Chemiefaser-Trägereinlage garantieren eine Formbeständigkeit (Dickenänderung von 13%) bei einer Druckbelastung von 130 N/cm². Dadurch werden Unebenheiten, Rückstände im Mauerwerk in der Rohranlage, Wellen-Tiefen-/ Höhenunterschiede bei Wellrohren, Erdreichablagerungen, Senkungen im Betrieb oder bei der Montage etc. ausgeglichen und Beschädigungen (Undichtheit) des Flachschlauchkissen unter Innenüberdruck bis 5,0 ± 0,2 bar vermieden.
Je nach Anwendungsbereich bestehen die v.g. einseitig klebenden dauerplastischen Kunststoffgemische z.B. aus einem tropf- und auspressfreien Petrolatum-Vaseline-gemisch, welches mit Quarzsand, Gesteinsmehl etc. modifiziert ist oder für Temperaturbereiche -40°C bis +90°C mit einem Zusatz von Bitumen und Prozessöl, mit Gelmassen oder flammwidrig-halogenfreiem PUR-Weichschaum modifiziert sind.
Die Erfindung wird an Hand von Ausführungsbeispielen näher erläutert.
Es zeigen:
- Fig. 1: eine perspektivische Ansicht eines Flachschlauchkissens gemäß der Erfindung mit einem PKW-Ventil mit metallener, kunststoffbeschichteter Ventilverlängerung an der Querseite
- Fig. 2: eine perspektivische Ansicht einer der Fig. 1 ähnlichen Vorrichtung, die zur längsförmigen Verwendung bei Rechteckkanälen oder zum Abdichten von Zwischenräumen bei Stellwänden ein Druckluftventil an der Längsseite enthält.
- Fig. 3: eine perspektivische Ansicht einer der Fig. 1 ähnlichen Vorrichtung die zur Befüllung mit flüssigen oder pulverisierten Medien an beiden VerschlußQuerseiten mit einem PKW-Druckluftventil versehen ist, die zumgleichzeitigen Befüllen und Entlüften des Flachschlauchkissens dienen.
- Fig. 4: eine perspektivische Ansicht einer der Fig. 1, 2 oder 3 ähnlichen Vorrichtung, die in der Länge auf den inneren Umfang des Mauerdurchbruchs, Kabelkanals oder des Zwischenraums bei Stellwänden und in der Breite auf den auszufüllenden Hohlraum begrenzt ist, und die auf der Ober-und Unterfläche teil- oder vollflächig mit einem Abdichtband versehen ist.
- Fig. 5 a: eine perspektivische Ansicht eines aufgeschnittenen Endteils des in Fig. 1 bis 4 und 16a gezeigten Flachschlauchkissens, hergestellt aus einem gefalteten Band einer Verbundfolie und einer kunststoffbeschichteten, metallenen Ventilverlängerung, die an der Querseite des Flachschlauchkissenverschlusses eingebracht ist.

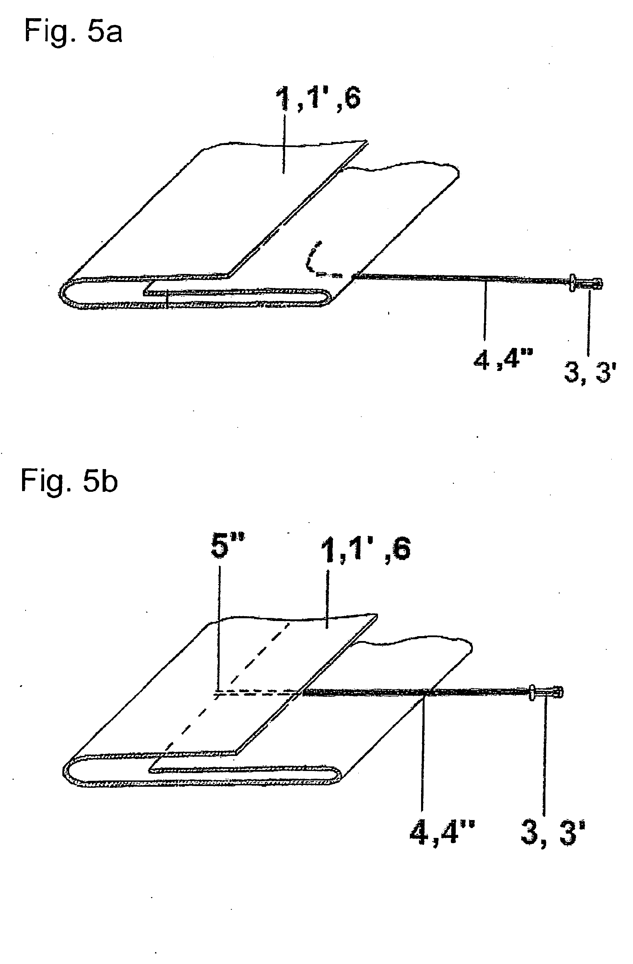

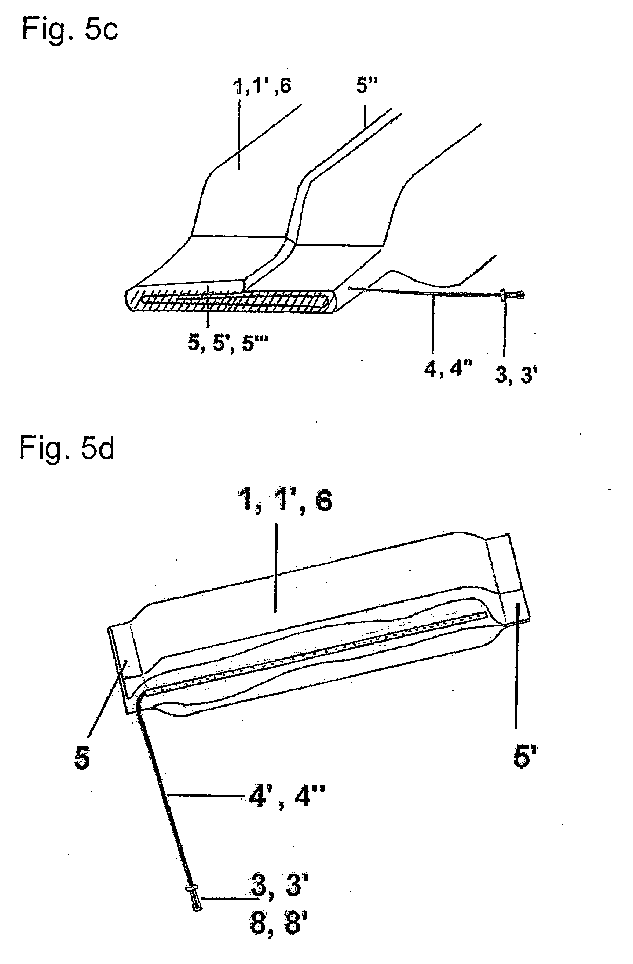

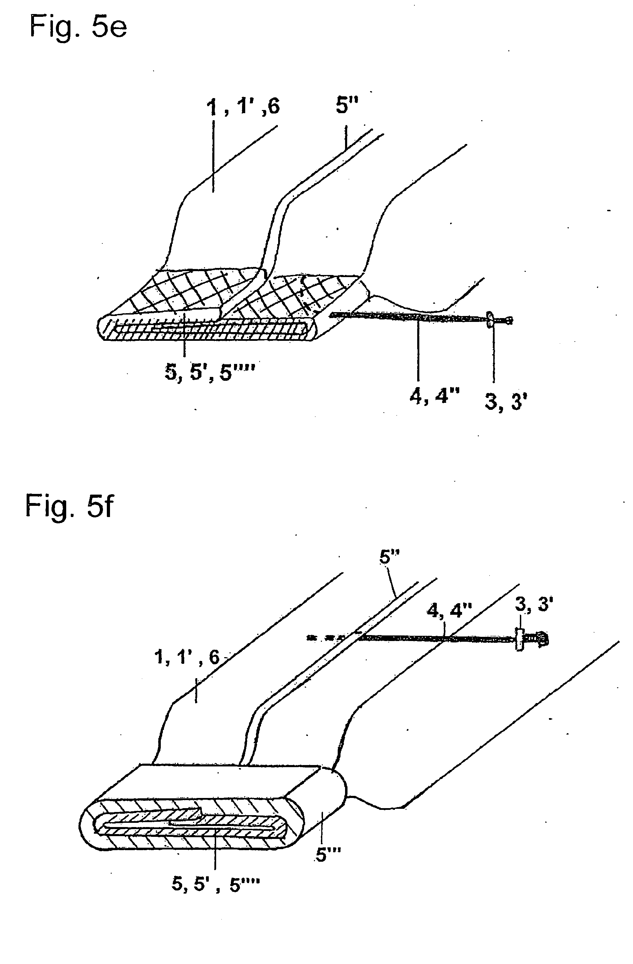

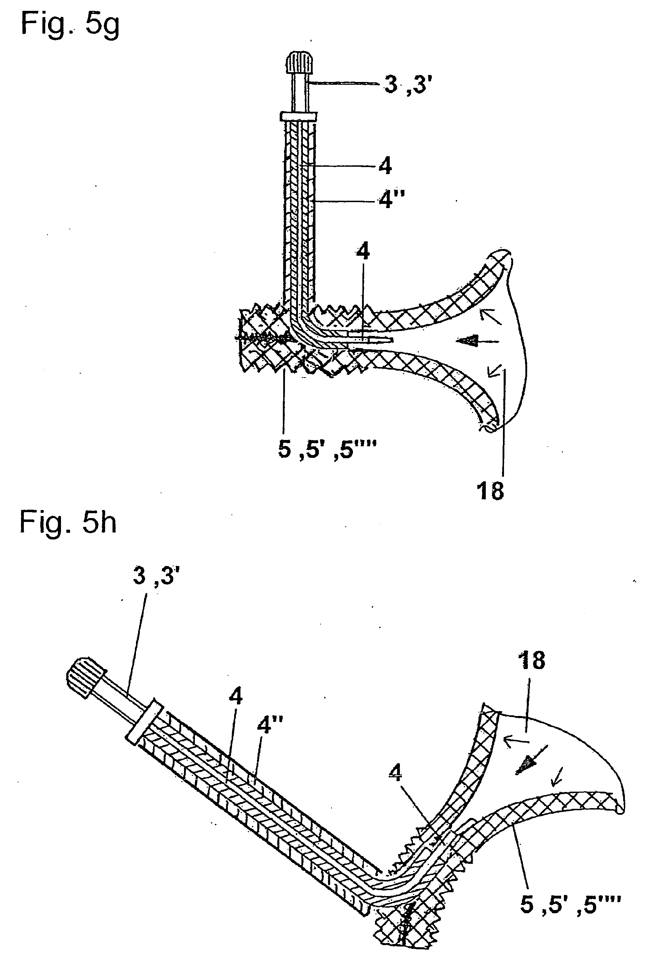

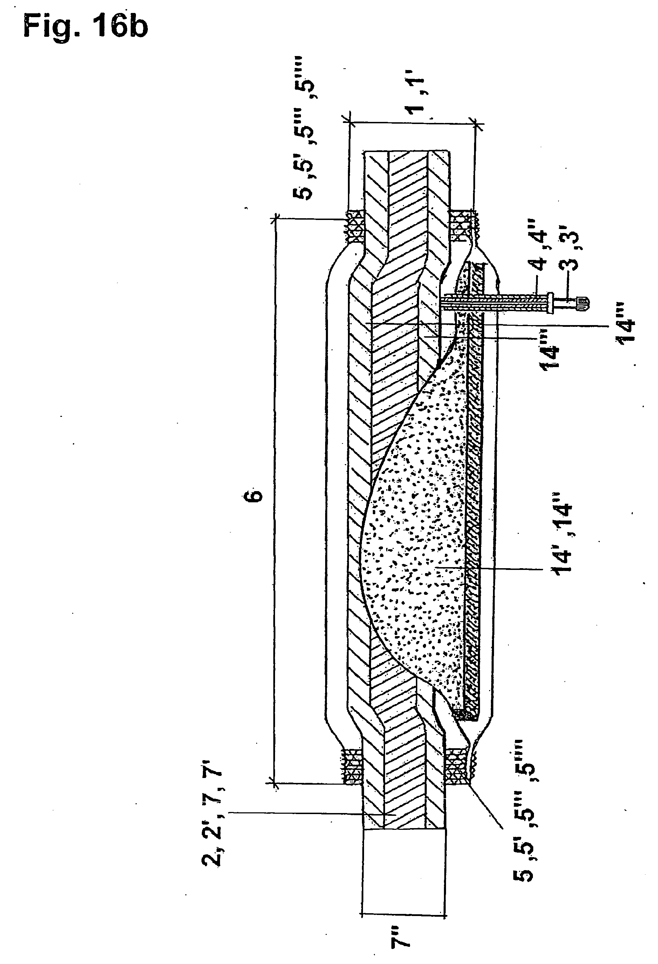

- Fig. 5 b: eine perspektivische Ansicht eines aufgeschnittenen Endteils des in Fig. 5a und 16b gezeigten Flachschlauchkissens, hergestellt aus einem gefalteten Band einer Verbundfolie und einer kunststoffbeschichteten, metallenen Ventilverlängerung, die an der Längsseite des Flachschlauch-kissens eingebracht ist.

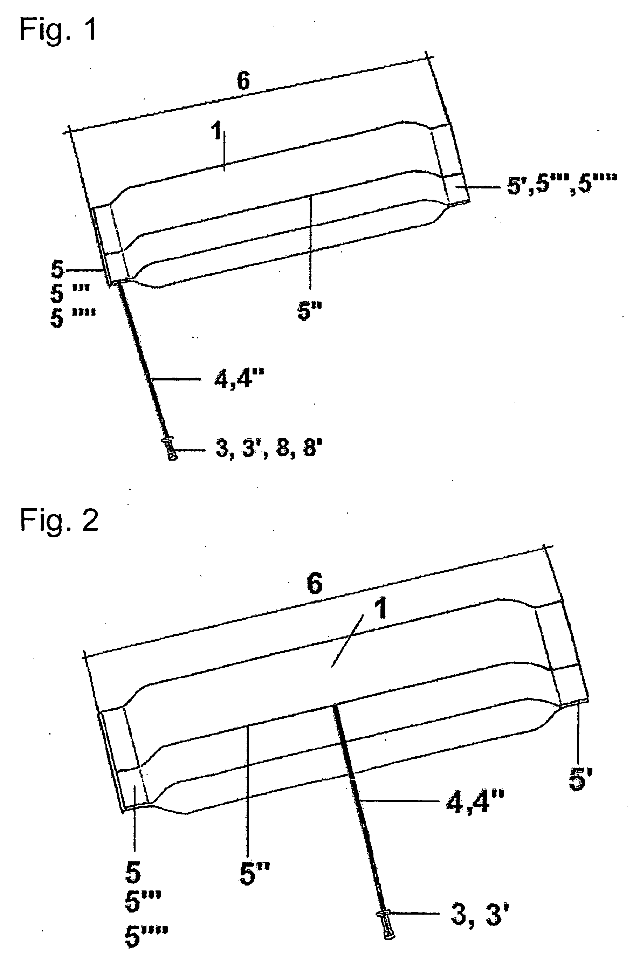

- Fig. 5 c: eine perspektivische Ansicht des Endteils des in Fig. 1, 2, 3, 4, 5a und 5b beschriebenen kunststoffbeschichteten Ventil-Endverschlusses, der mittels Heißsiegel-/ Hochfrequenzschweißverfahren hergestellt wurde und eine glatte Ober- / Unterseite aufweist.
- Fig. 5 d: eine perspektivische Ansicht des in Fig. 1, 2, 3 und 4 beschriebenen Flachschlauchkissens im aufgeschnittenen Zustand, mit einer kunststoffbeschichteten, metallenen Ventilverlängerung, die an der Querseite des Flachschlauchkissenverschlusses eingebracht ist und welche im Inneren des Flachschlauchkissens mit einem, über die gesamte Flachschlauchkissenlänge reichenden, perforierten Kunststoffschlauch versehen ist.
- Fig. 5e: eine perspektivische Ansicht des in den Figuren 1, 2, 3, 4, 5a und 5c gezeigten Endenverschlusses, der mittels eines Heizstempel-Schweißverfahrens hergestellt wurde und für kreisförmige Anwendungen des Flachschlauchkissens mit erhöhten Anforderungen an den Kissen-Fülldruck (Scherspannung) eine waabenförmige oder gewellte Verschluß-Ober- und -unterseite aufweist.
- Fig. 5f: eine perspektivische Ansicht des in den Figuren 1, 2, 3, 5b ,5c, 5d und 5e gezeigten druckdichten Verschlusses, der für längsförmige Anwendungen mit erhöhten Anforderungen an den Kissen-Fülldruck zusätzliche Metall-oder Kunststoffverpressungen aufweist
- Fig. 5g: einen Querschnitt eines druckdichten Flachschlauchkissen-Enden- verschlusses mit Ventil der Fig. 5a, 5c und 5e mit waabenförmiger oder gewellter Ausgestaltung der Verschluß- Ober- bzw. Unterseite unter Scherspannung an der Ventilverlängerung bei einem Flachschlauchkissen-Fülldruck von 3 bar
- Fig. 5h: einen Querschnitt eines druckdichten Flachschlauchkissen- Endenverschlusses der Fig. 5g mit waabenförmiger oder gewellter Ausgestaltung der Verschluß- Ober- bzw. Unterseite unter Biege-Scherspannung an der Ventilverlängerung bei einem Flachschlauchkissen-Fülldruck von 3 bar

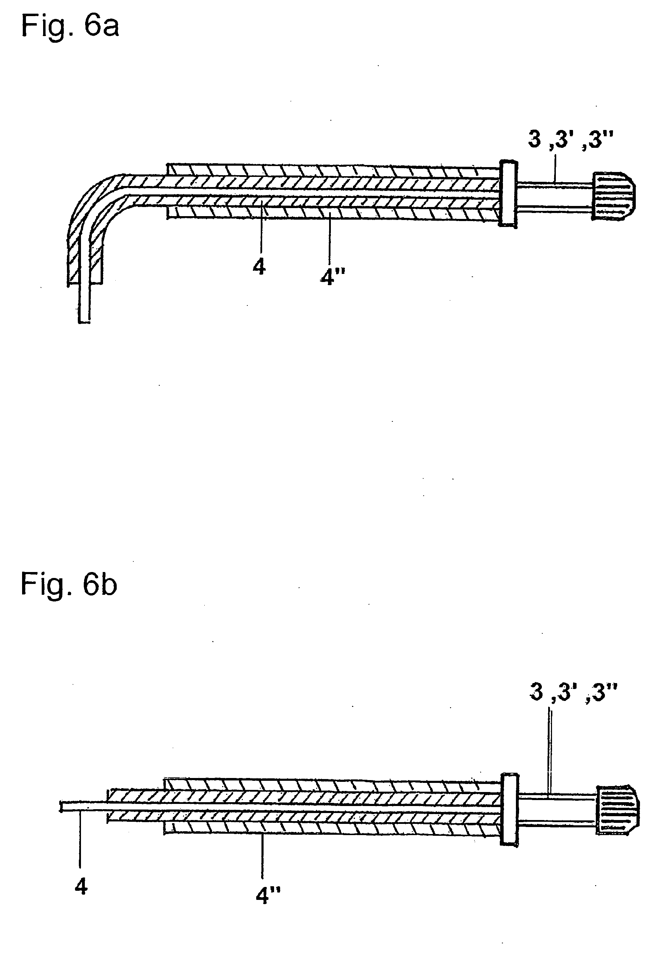

- Fig. 6a und 6b: eine perspektivische Ansicht des in den Figuren 1 bis 5 gezeigten, im Flachschlauchkissen eingelegten Sonderventils

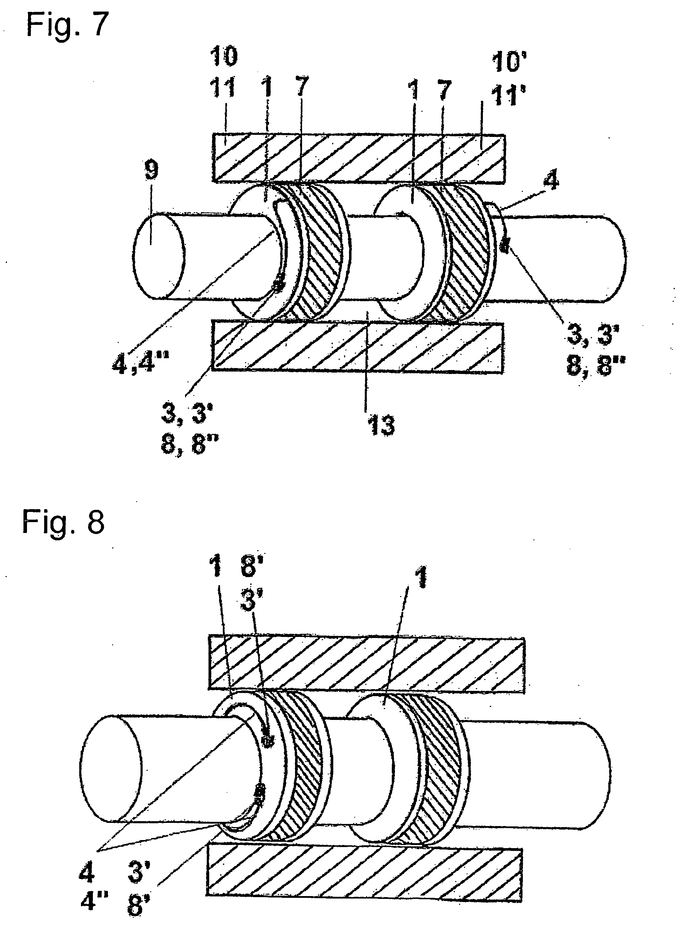

- Fig. 7 bis 14: zeigen verschiedene Ausgestaltungen der in Fig. 1, 3 und 4 beschriebenen Adichtvorrichtung
- Fig. 7: zeigt die perspektivische Ansicht der in Fig. 1, 3, 4 und 16a beschriebenen Abdichtvorrichtung zur kreisförmigen Anordnung, mit einem Ventil zur Befüllung des Flachschlauchkissens zum gas-, druckwasserdichten und ggfs. brandabschottenden Verschließen von Hohlräumen zwischen Mauerdurchbruch und Kabel- und/oder Medienrohr, glattem oder gewelltem Futterrohr (Hülse) und glattem oder gewelltem Kabel- und/ oder Medienrohr.
- Fig. 8: zeigt die perspektivische Ansicht der Fig. 7 mit zwei Ventilen zur Befüllung des Flachschlauchkissens mit pulverisierten oder flüssigen Füllmedien.

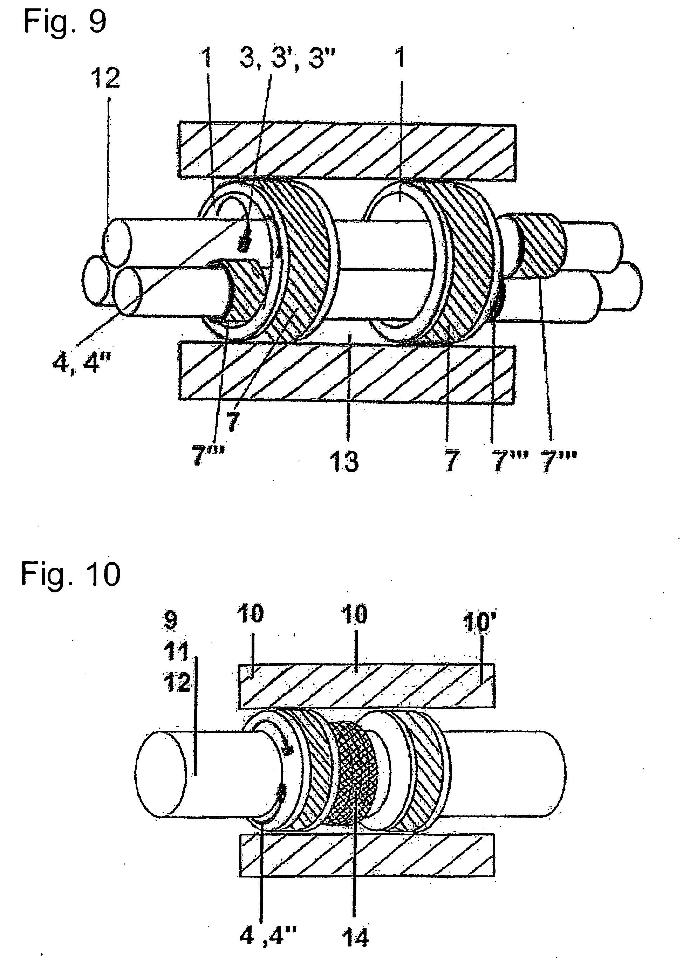

- Fig. 9: zeigt die perspektivische Ansicht der Fig. 7 und 8 bei dem jedes Kabel und/oder Medienrohr mit einem Abdichtband oder einem brandabschottenden Band umwickelt wurde
- Fig. 10: zeigt die perspektivische Ansicht der Fig. 7, 8 und 9 bei dem zusätzlich ein Schlauch mit brandabschottender Abdichtung eingebracht ist.

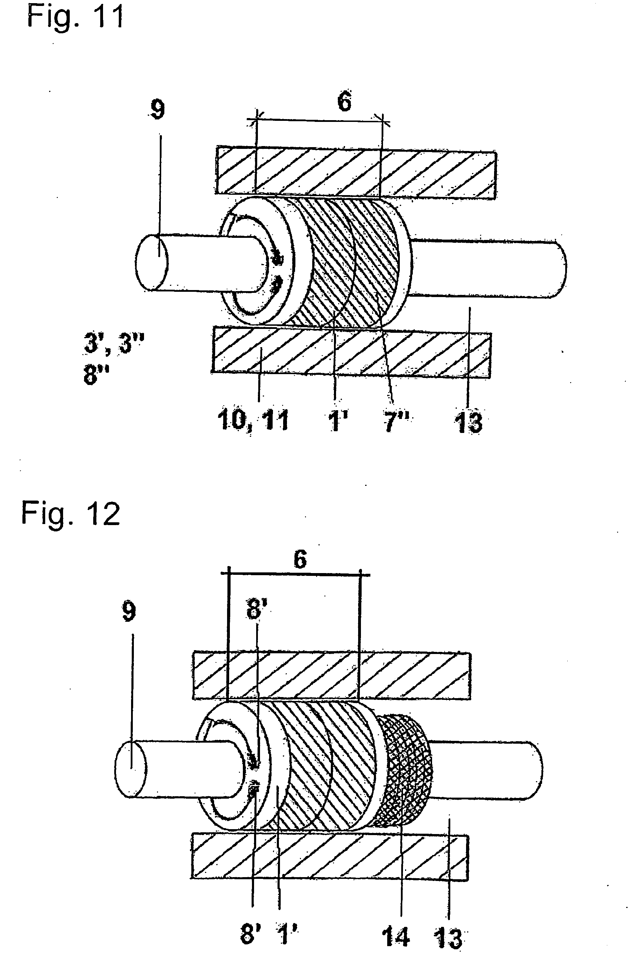

- Fig. 11: zeigt die perspektivische Ansicht der Fig. 1, 2, 3, 4 und 16a in der Ausgestaltung, dass das Flachschlauchkissen auf der Außenseite in der Breite vollflächig mit Abdichtband bedeckt ist, um das Flachschlauchkissen vor Beschädigungen durch Steine oder Unebenheiten etc. im Mauerwerk, Rohr etc. zu schützen.
- Fig. 12: zeigt die perspektivische Ansicht der Fig. 10 und 11 mit der Ausgestaltung, dass zusätzlich zum Flachschlauchkissen eine brandabschottendes Medium eingebracht ist.

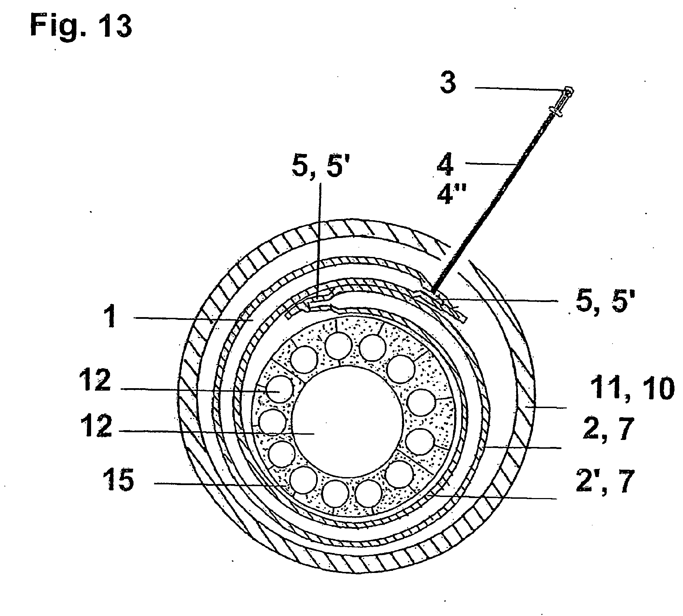

- Fig. 13: einen Querschnitt der in Fig. 1, 3, 4, 5d und 16a gezeigten Vorrichtung, die im Kabelkanalrohr zum Abdichten von Standard-Mehrfachrohren und/oder -Kabeln kreisförmig in einer Lage um einen Dichtstern zur Aufnahme der Standard-Mehrfachrohre und/oder -Kabel angeordnet ist.

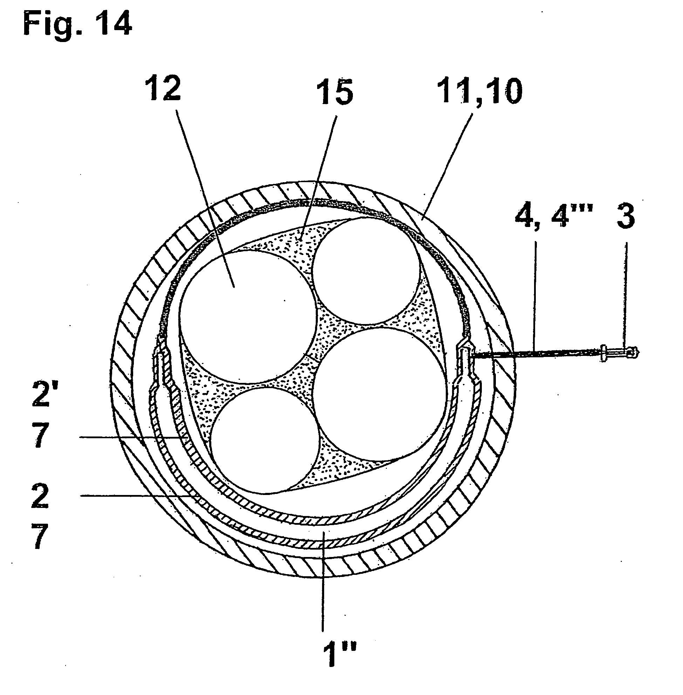

- Fig. 14: einen Querschnitt der in Fig.. 1, 3, 4, 5d und 16a gezeigten Vorrichtung, die im Kabelkanalrohr zum Abdichten von Anwendungen mit Standard-Mehrfachrohren , und/oder -Kabeln mit großem Außendurchmesser halbkreisförmig um einen Dichtstern zur Aufnahme der Standard-Mehrfachrohre und/oder -Kabel angeordnet ist.

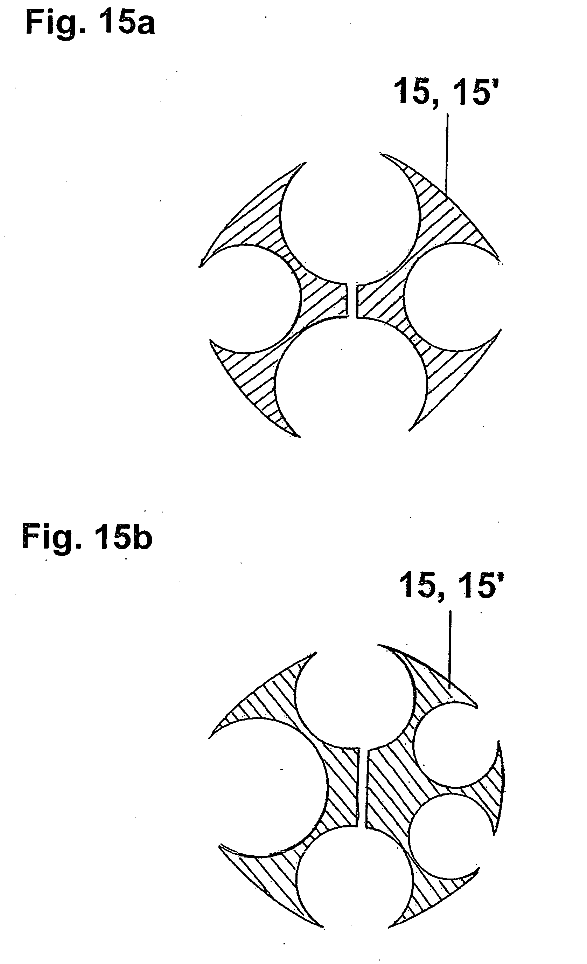

- Fig. 15a: einen Querschnitt der in Fig. 13 und 14 gezeigten zweigeteilten Dichtsterne zum Abdichten von Zwischenräumen bei Vierfach-Standard-Mehrfachrohren und/oder Kabeln.
- Fig. 15b: einen Querschnitt eines zweigeteilten Dichtsterns in ungeschlossener Ausführung zum Abdichten von Zwischenräumen bei Fünffach-Standard-Mehrfachrohren und/oder Kabeln.

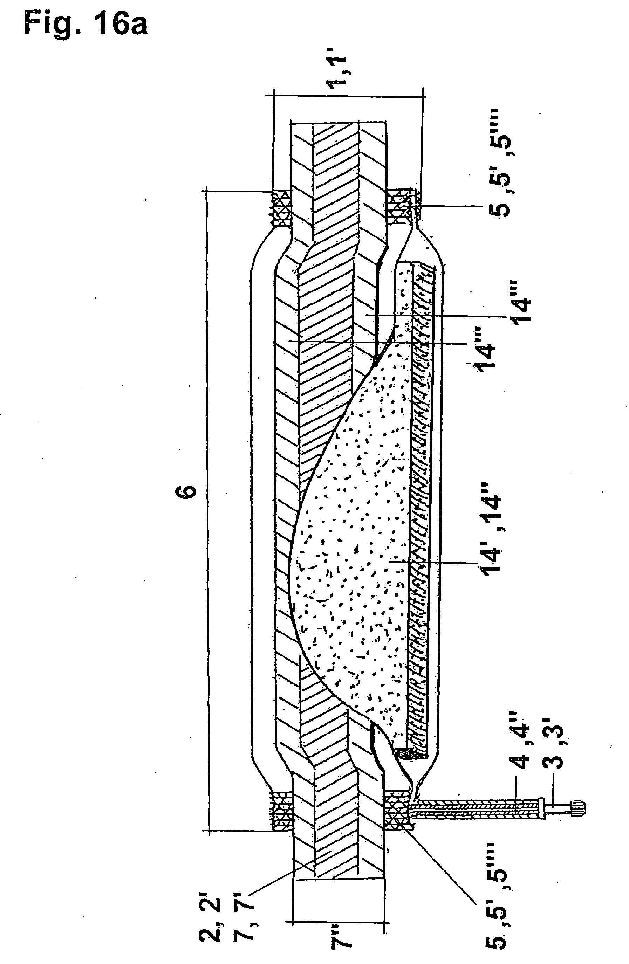

- Fig. 16a: eine perspektivische Ansicht der Fig. 1, 3, 4 und 5d zur kreisförmigen Anwendung im aufgeschnittenen Zustand, die bereits werkseitig mit einem brandabschottenden elastischen Grundpolymer gefüllt wurde
- Fig. 16b: zeigt wie Fig. 2, 5d und 16a ein Flachschlauchkissen zur längsförmigen Anwendung in Rechteckkanälen oder bei Zwischenwänden, welches bereits werkseitig mit einem brandabschottenden Werkstoff gefüllt wurde

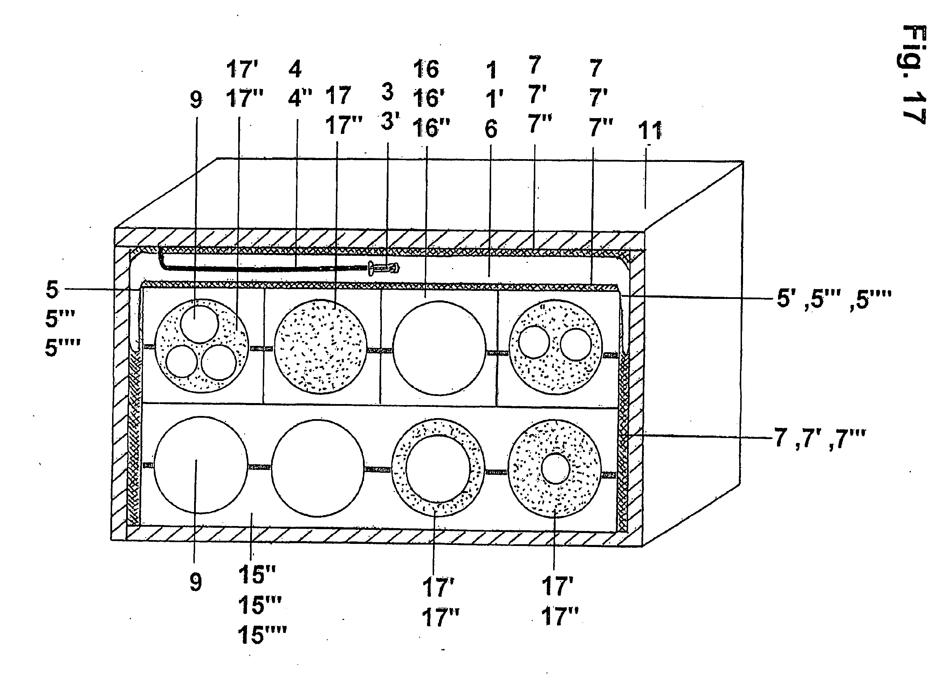

- Fig. 17: eine perspektivische Ansicht der in Fig. 2, 5d und 16b gezeigten Vorrichtung die zum gas-, wasserdichten und brandabschottenden Verschließen von Hohlräumen zwischen Kabelkanäle und Dichtblöcke (Module) eingelegt ist

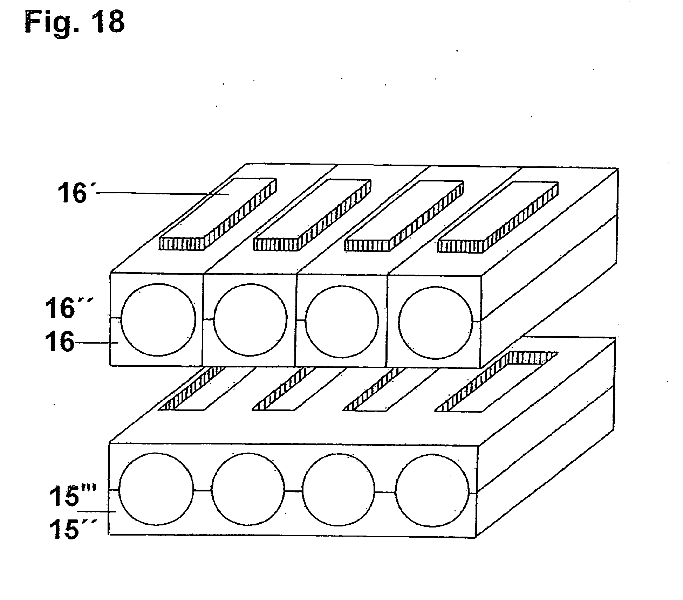

- Fig. 18: eine perspektivische Ansicht der in Fig. 17 gezeigten Vorrichtung die zum gas-, wasserdichten und brandabschottenden Verschließen von Hohlräumen zwischen Kabelkanälen und zweigeteilten elastischen Dichtblöcken eingelegt ist

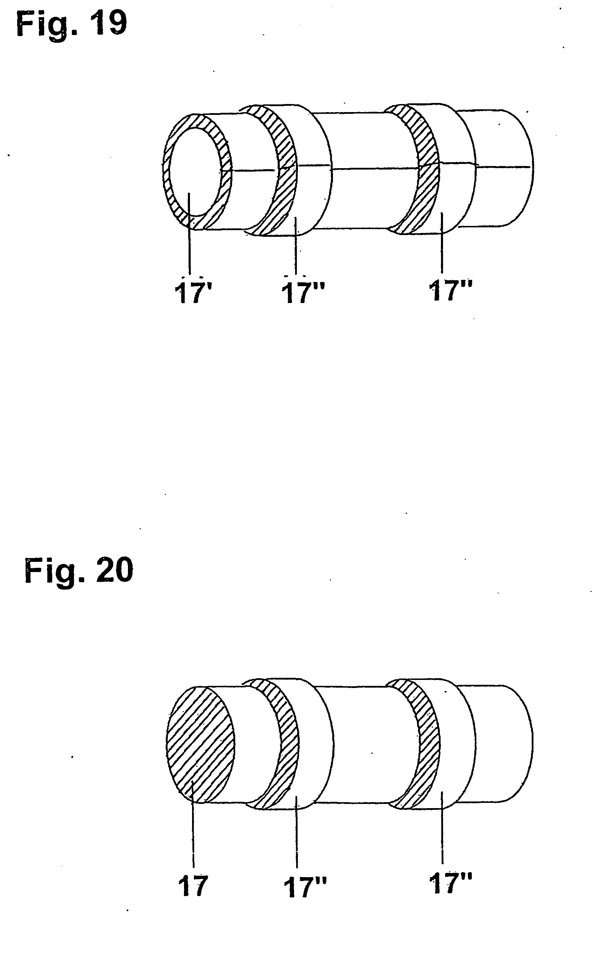

- Fig. 19: eine perspektivische Ansicht der in Fig. 17 gezeigten Vorrichtung die zum gas-, wasserdichten und brandabschottenden Verschließen von Hohlräumen zwischen Kabelkanälen und elastischen Dicht- und Einzelblöcken eingelegt ist
- Fig. 20: eine perspektivische Ansicht des in Fig. 17 beschriebenen Blindstopfens mit Verankerungen an der Außenseite zur Verwendung als Abdichtelement bei unbelegten Dicht- oder Einzelblöcken.

Die Fig. 1 zeigt die Vorrichtung bestehend aus einem abgelängten Flachschlauchkissen [1, 6] mit einem Druckluftventil [3, 3'] welches mit einer metallenen, kunststoffbeschichteten Ventilverlängerung [4,4"] verbunden ist, die sich an einer der Querseiten des Flachschlauchkissens befindet und die bei einlagiger Anwendung eine optimale Druckverteilung gewährleistet. Die Ausbildung als Flachschlauchkissen wird durch Herstellung von druckdichten Verschlüssen an beiden Enden (Querseiten) [5, 5', 5"',5""] und in Längsrichtung [5"] erzielt.
Je nach Anwendungsbereich wird das Flachschlauchkissen [1] kreisförmig zwischen Mauerdurchbruch und Mantelrohr, Kabelkanal und Medienrohr oder Mehrfach- Medien-rohr, Mehrfach-Kabel eingelegt.
Durch Befüllen der Vorrichtung [1] über das Druckluftventil [3] nach Fig. 6a mit gasförmigen [8] Füllmedien werden die Hohlräume ausgefüllt. Nach Ablassen der Befüllung aus dem Flachschlauchkissen [1] ist eine einfache Demontage möglich und das Flachschlauchkissen [1] kann wieder verwendet werden.

Die Fig. 2 zeigt eine der Fig. 1 ähnliche Vorrichtung zur längsförmigen Verwendung in Rechteck-Kabelkanälen oder zum Abdichten von Zwischenräumen bei Stellwänden, bei der das Druckluftventil [3, 3'] nach Fig. 6b an der Längsseite [5"] des Flachschlauchkissen angebracht sein kann.

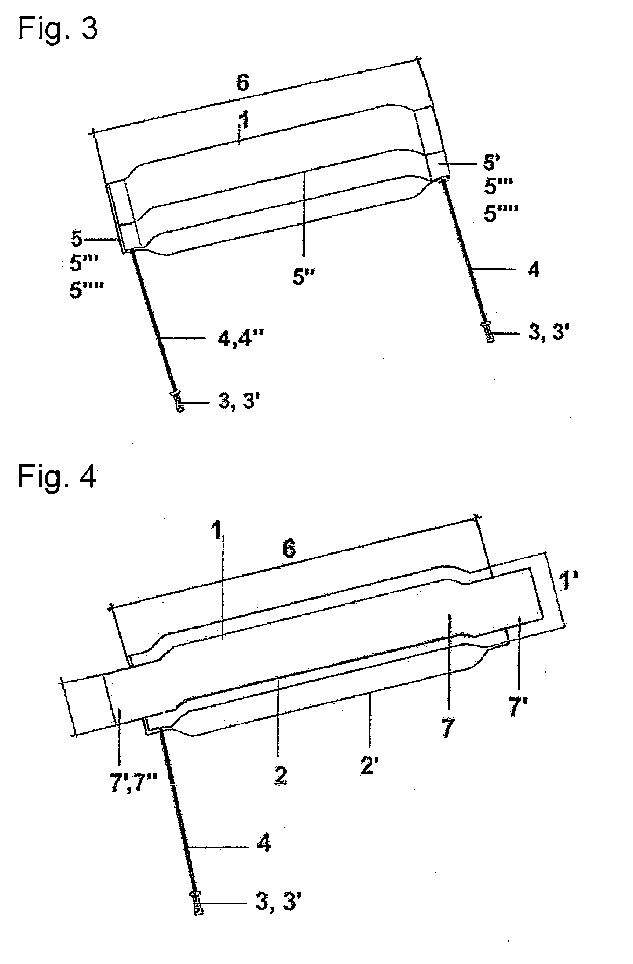

Die Fig. 3 zeigt eine der Fig. 1 und 2 ähnliche Vorrichtung, die zwei Druckluftventile [3, 3'] mit Ventilverlängerung [4] aufweist und zur Befüllung des Flachschlauchkissens mit gasförmigen, pulverisierten oder flüssigen Medien geeignet ist. Während das erste Druckluftventil zur Befüllung dient, kann über das zweite Druckluftventil [3, 3'] die beim Einfüllen komprimierte Luft abgelassen werden.

Fig. 4 zeigt eine ähnliche Vorrichtung der Fig. 1, 2 und 3 die in der Länge [6] auf den gesamten inneren Umfang des Mauerdurchbruchs, Mantelrohrs, Kabelkanalohrs oder auf die Länge des Zwischenraumes bei Stellwänden und in der Breite [1'] auf den auszufüllenden Hohlraum zum Medienrohr oder der Stellwand begrenzt ist. Ober- [2] und Unterseite [2'] des Flachschlauchkissens können teil- oder vollflächig mit einem Abdichtband [7] vorkonfektioniert sein, das längenmäßige Überstände [7'] aufweisen kann. Das vollflächige Aufbringen oder Aneinanderreihen der Abdichtbänder [7"] auf das Flachschlauchkissen ist bei Anwendung in Mauerdurchbrüchen vorteilhaft.

Fig. 5a bis 5h zeigen perspektivisch verschiedene Ausgestaltungen eines druckdichten Flachschlauchkissen-Verschlusses mit Ventil, und insbesondere wie die metallene, kunststoffbeschichtete Ventilverlängerung [4] im Flachschlauchkissen [1, 1', 6] eingebracht werden kann.
Fig. 5a zeigt eine perspektivische Teilansicht des in Fig. 1, 3, 4 und 16a beschriebenen Endverschlusses [1, 1', 6] an der Querseite des Flachschlauchkissens, hergestellt aus einer überlappend gefalteten Verbundfolie. Das Ende wurde hier im unverschlossenen Zustand dargestellt, um die Lage des Sonderventils [4, 3, 3'] am druckdichten Verschluss zu zeigen.
Fig. 5b zeigt eine perspektivische Teilansicht des in Fig. 2, 4 und 16b beschriebenen Flachschlauchkissens [1, 1', 6] wobei hier die kunststoffbeschichtete Ventilverlängerung [4] des Sonderventils [3, 3'] an der Längsverschweißung [5"] der überlappend gefalteten Verbundfolie des Flachschlauchkissens eingelegt ist. Das Flachschlauchkissenteil wurde hier im unverschlossenen Zustand dargestellt, um die Lage des Sonderventils der Fig. 2 im Inneren der druckdichten Längsverschweißung [5"] des Flachschlauchkissens [1] zu zeigen.

Fig. 5c zeigt eine perspektivische Ansicht des in Fig. 1, 3, 4, 5a, 5d, 5g, 5h und 16a beschriebenen Flachschlauchkissens [1, 1', 6] gebildet aus einer Verbundfolie mit druckdichten Verschlüssen an den Querseiten [5, 5', 5"] und der Folienüberlappung in Längsrichtung [5"]. Der mittels Heißsiegel- oder Hochfrequenz-Schweißverfahren hergestellte Endenverschluß [5, 5', 5", 5"'] weist eine glatte Ausgestaltung nach Fig. 5a mit einer Verbundfoliendicke von 250 bis 600 µm auf, beherbergt ein eingelegtes Sonderventil [4, 3, 3'] nach Fig. 6a und hält bei kreisförmiger Anwendung einer Biege-Scherspannung der Verbundfolien-Kunststoff-Metallverbindung von 100 - 120 N/cm stand.

Fig. 5d zeigt eine perspektivische Ansicht des in Fig. 1, 3 und 4 beschriebenen Flachschlauchkissens [1, 1', 6] mit zwei, im Heißsiegel- oder Hochfrequenz Schweißverfahren hergestellten, druckdichten Verschlüssen [5, 5', 5"] an den beiden Querseiten des Flachschlauchkissens und einer druckdicht eingeschweißten metallenen, kunststoffbeschichteten Ventilverlängerung [4'] die im Inneren des Flachschlauchkissens, mit einem über die gesamte Länge des Flachschlauchkissens [6] reichenden, perforierten, biegsamen Kunstoffschlauch verbunden ist, der bei langen Flachschlauchkissen zur gleichmäßigen Verteilung der Befüllung dient. Am äußeren Ende der metallenen, kunststoffbeschichteten Ventilverlängerung [4'] ist ein PKW-Druckluftventil [3, 3'] zur Befüllung des Flachschlauchkissens mit Füllmedien [8, 8'] angebracht. Das Flachschlauchkissen [1, 1', 6] wurde hier im aufgeschnittenen Zustand dargestellt, um die Lage der Ventilverlängerung [4, 4'] innerhalb des Flachschlauchkissens zu zeigen.

Fig. 5e zeigt eine perspektivische Ansicht des in den Figuren 1, 3, 4, 5d und 16a gezeigten Flachschlauchkissens [1, 1', 6] zur kreisförmigen Anwendung das aus einer Verbundfolie mit druckdichten Verschlüssen an den beiden Querseiten [5, 5'] und aus einer Überlappung [5"] in Längsrichtung gebildet ist. Der mittels Heizstempel-Schweißverfahren hergestellte Endenverschluß [5, 5'] weist eine waabenförmige oder gewellte Ausgestaltung nach Fig. 5g und 5h auf. Die waabenförmige oder gewellte Verschluß-Oberfläche [5""] ermöglicht einen erhöhten Flachschlauchkissen-Fülldruck und eine Scherspannungsbeständigkeit von 120 -140 N/cm. In den Endenverschluß können ein oder zwei Sonderventile [4, 3, 3'] eingeschweißt sein.
Fig. 5f zeigt eine perspektivische Ansicht des in den Fig. 1, 2, 3, 4, 5d, 5e und 16b gezeigten Flachschlauchkissens [1, 1', 6] das aus einer Verbundfolie mit druckdichten Verschlüssen an den Querseiten [5, 5', 5""] und einer Überlappung [5"] in Längsrichtung gebildet ist. Der mittels eines Heizstempel-Schweißverfahren hergestellte Endenverschluss an den Querseiten [5, 5', 5"] weist eine glatte, waabenförmige oder gewellte Ausgestaltung und eine zusätzliche Metall- oder Kunststoffverpressung [5"'] auf, die bei längsförmiger Anwendung des Flachschlauchkissen zusätzliche Innenüberdruck-Scherkräften standhält. In der Überlappung [5"] der Verbundfolie können ein oder zwei Sonderventile [4, 3, 3'] eingeschweißt sein.

Fig. 5g zeigt einen Querschnitt der Fig. 5c, 5e und 5f eines druckdichten Endverschlusses [5, 5'] mit einem metallenen kunststoffbeschichteten Sonderventil [4, 4", 3, 3'] nach Fig. 6a oder 6b und einer waabenförmigen oder gewellten Ausgestaltung der Verschluß- Ober- bzw. Unterfläche [5""] unter Scherspannung [18] bei einem Flachschlauchkissen-Fülldruck von ≤ 2 bar. Der Endenverschluß ist hier im gestreckten Zustand wie bei längsförmiger Anwendung als Hebe- und Abdichtelement für Zwischenräume bei Stellwänden dargestellt.

Fig. 5h zeigt eine Querschnitt der Fig. 5g eines druckdichten Endenverschlusses [5, 5'] mit Kunststoff-Metallverbindung bei einem Flachschlauchkissen-Fülldruck von ≤ 4 bar. Der druckdichte Endverschluss an der Querseite [5,5'] besitzt ein kunststoffbeschichtetes, metallenes Sonderventil [4, 4", 3, 3'] und eine waabenförmig oder gewellte Ausgestaltung der Verschluß- Ober- bzw. Unterfläche [5""]. Der Endenverschluß ist hier im gebogenen Zustand wie bei der kreisförmigen Anwendung als Abdichtelement in Rohrzügen dargestellt.

Die Fig. 6a und 6b zeigen eine perspektivische Ansicht des in den Fig. 5a, 5c, 5d, 5e, 5g und 5h gezeigten Sonderventils im gebogenen Zustand bzw. des in den Fig. 5b und 5f gezeigten Sonderventils im geraden Zustand, bestehend aus einem Druckluftventil [3, 3', 3"] mit metallener Ventilverlängerung [4], welche aus mechanischthermischen Gründen der Verbindung zwischen Metall [4] und Flachschlauchkissen [1] mit PE, PUR oder PA kunststoffbeschichtet ist und als Biegeschutz der metallenen Ventil-verlängerung [4'] zusätzlich einen wärmeschrumpfenden Schlauch [4"] aufweist.

Die Figuren 7 bis 14 zeigen verschiedene Ausgestaltungen der in Fig. 1, 3, 4 und 16a beschriebenen Vorrichtung zur kreisförmigen Anordnung der Vorrichtung als Abdichtelement in Mauerdurchbrüchen [10], glatten oder gewellten Futterrohren (Hülse) [1o] oder Kabelkanälen [11].
Fig. 7 zeigt einen Querschnitt der in Fig. 1, 4, 5d und 16a kreisförmig angeordneten Vorrichtung, mit der der Hohlraum [13] von der Innenwand zwischen Mauerdurchbruch [10]/ Futterrohr (Hülse) [10], Kabelkanal/ Mantelrohr [11] und von der Außenwand zwischen Mauerdurchbruch [10']/ Futterrohr (Hülse) [10'], Kabelkanal/ Mantelrohr [11'] und Medienrohr [9] gas- und wasserdicht verschlossen wird.
Die Vorrichtung besteht aus einem oder zwei vorkonfektionierten Flachschlauchkissen
[1, 1', 6] mit einem metallenen Druckluftventil [3, 3', 8, 8"] das mit einer kunststoffbeschichteten Ventilverlängerung [4, 4"] versehen ist. Zum gas- und wasserdichten Verschließen des Hohlraums [13] wurde ein vorkonfektioniertes, nicht dauerhaft mit den Bauteilen verklebendes Dichtband [7] um die Ober- [2] und Unterseite [2'] des Flachschlauchkissens [1] gewickelt.
Durch Befüllen der Vorrichtung über das Druckluftventil [3, 3', 3"] mit gasförmigen Medien [8] oder flexibel aushärtenden und/ oder auflösenden Füllmedien [8"] werden die Zwischenräume [13] ausgefüllt. Nach Ablassen des Drucks aus dem Flachschlauchkissen [1] ist eine einfache Demontage möglich und das Flachschlauchkissen [1] kann wieder verwendet werden.

Die Fig. 8 zeigt eine der Fig. 7 ähnliche Vorrichtung, bei der das Flachschlauchkissen [1] zum Befüllen mit flüssigen Füllmedien [8'] an jedem druckdichten Verschluß an den Querseiten [5, 5'] der Fig. 3 und 16b mit einer metallenen, kunststoffbeschichteten Ventilverlängerung [4, 4"] und einem Druckluftventil [3'] versehen ist. Zum Ablassen der flüssigen Füllmedien kann ein Ventiladapter mit Absperrhahn verwendet werden.

In Fig. 9 ist eine der Fig. 7 ähnliche Ausbildung der Abdichtung für Mehrfach-Medienrohre oder Mehrfachkabel [12] dargestellt, bei dem jedes einzelne Medienrohr und/ oder Kabel vor Befüllung des Flachschlauchkissens [1, 6] außerhalb der Abdichtstelle mit Abdichtband [7"'] umwickelt und dieser Wickel anschließend unter das Flachschlauchkissen [1] mit vorkonfektioniertem Dichtband [7, 7"] geschoben wird. Nach Befüllung des Flachschlauchkissen [1] über das Druckluftventil [3, 3', 3", 4, 4"] und Verpressung der Dichtbänder [7, 7'"] werden alle Hohlräume [13] druckgas- und wasserdicht verschlossen.

Fig. 10 zeigt eine, der Fig. 8 ähnliche perspektivische Ansicht der Abdichtvorrichtung mit brandabschottender Zusatzfunktion. Zusätzlich zu der in Fig. 8 beschriebenen Abdichtvorrichtung befindet sich im Zentrum der Mauerdurchführung [10] ein, um das Medienrohr [9], Mehrfach-Medienrohr [12] oder den Kabelkanal [11] gewickeltes Band oder ein Schlauch mit brandabschottender Funktion [14].

Fig. 11 zeigt eine der Fig. 8 ähnliche Abdichtvorrichtung, die aus einem Flachschlauchkissen [1'] mit einer Breite von 550 mm der Fig. 3 oder 4 besteht, das mit einem vollflächig bedeckenden oder mit aneinander gereihten Abdichtbändern [7"] bedeckt ist. Die Vorrichtung findet Anwendung beim Abdichten von Hohlräumen [13] bei Mauerdurchführungen bis 600 mm Durchmesser oder einem besonders hohen flexiblen, reibschlussfesten Druckverschluß zwischen Mauerdurchbruch [10], Mantelrohr/ Kabelkanal [11] und dem Medienrohr [9]. Mit Füllung des Flachschlauchkissens [1'] über die Druckluftventile [3'] mit flüssigen Medien [8'] wird eine erhöhte Abdichtung erzielt.

Fig. 12 zeigt eine, der Fig. 10 oder 11 ähnliche perspektivische Ansicht der Abdichtvorrichtung mit brandabschottender Zusatzfunktion, in welcher abweichend zur Fig. 11 und 16b zusätzlich zur druckgas-, wasserdichten und brandabschottenden Abdichtung des Zwischenraums [13] ein brandabschottender Füllschlauch [14] oder Band über das Medienrohr [9] gewickelt und das Flachschlauchkissen [1'] ggfs. nach Fig. 16b mit brandabschottender Füllung [14'. 14"] befüllt ist.

Die Fig. 13 zeigt einen Querschnitt der in Fig. 1, 2, 3, 4, 5d, 7, 9 und 16a gezeigten vollkreisförmig angeordneten Vorrichtung zur Abdichtung der im Mantelrohr/ Kabelkanalrohr [11] oder Mauerdurchbruch [10] verlegten Kabel oder Mehrfach- und/oder Kabelkanalrohre [12]. Die Vorrichtung besteht wie in Fig. 7-12 aus einem vorkonfektionierten Flachschlauchkissen [1] mit einem metallenen Druckluftventil [3], das mit einer kunststoffbeschichteten Ventilverlängerung [4, 4"] versehen ist. Die Enden des Flachschlauchkissens wurden mittels geeignetem Verfahren zu waabenförmigen, gewellten [5""] oder glatten Verbundfolienverschlüssen [5, 5'] bis 5 bar Innenüberdruck- und scherfest [18] verschlossen. Zum druckgas- und wasserdichten Verschließen eines Mantelrohrs/ Kabelkanalrohres [11] oder Mauerdurchbruchs [10] wurde ein vorkonfektioniertes, nicht dauerhaft mit den Bauteilen verklebendes Dichtband [2, 7], um das Flachschlauchkissen [1] gewickelt. Zum Auffüllen der Zwickel zwischen Mehrfachrohr und/oder -Kabeln [12] wird ein vorgeformter zweigeteilter flexibler Dichtstern [15] eingelegt. Die 0,5 bis 2,5 bar gas- oder wasserdichte Abdichtung des Mantel- oder Kabelkanalrohres wird durch Erhöhung des Innendrucks durch Einbringung von Luft oder einer Flüssigkeit über das Druckluftventil [3] und Verpressen des Dichtbands [7, 2] und der flexiblen Dichtsterne [15] in die Zwickel erzielt. Durch anschließende Druckreduzierung befindet sich das Druck-Spannungs-Verformungsverhältnis des Flachschlauchkissens [1] im elastischen Bereich.

Fig. 14 zeigt einen Querschnitt der Ansicht der Fig. 13 bei dem das Flachschlauchkissen [1"] halbkreisförmig um ein(en) Kabel-/ Rohrverbund [12] mit großem Außendurchmesser gelegt ist, der sich in einem Mantel-/ Kabelkanalrohr [11] oder einem Mauerdurchbruch [10] befindet. Die 0,5 bis 2,5 bar druckgas- und wasserdichte Abdichtung des Kabel-/ Rohrverbunds [12] im Kabelkanal-/ Mantelrohr [11] oder Mauerdurchbruch [10] wird durch Einlegen des Rohr-/ Kabelverbunds in den Dichtstern [15], das Dichtband [2, 2', 7] und die Verpressung durch das Flachschlauch-kissen [1"] erzielt.

Die Figuren 15a bis 15b zeigen verschiedene mögliche Ausgestaltungen der in Fig. 13 und 14 beschriebenen zweigeteilten Dichtsterne [15] für Standard-Mehrfachrohre oder Mehrfachkabel mit definiertem Außendurchmesser, die im Kabelkanal/ Mantelrohr [11] Verwendung finden.

Fig. 15a zeigt einen Querschnitt durch einen ungeschlossenen zweigeteilten Dichtstern [15, 15'] für vier Rohre oder Kabel.

Fig. 15b zeigt einen Querschnitt durch einen ungeschlossenen zweigeteilten Dichtstern [15, 15'] für fünf Rohre oder Kabel

Fig. 16a und 16b zeigen eine perspektivische Ansicht des ins Fig. 1-4, 5d gezeigten Flachschlauchkissens [1,1',1"',6] im aufgeschnittenen Zustand, das werkseitig mit einer brandabschottenden Füllung und einer brandabschottenden Umhüllung versehen wurde.

Fig. 16a zeigt eine perspektivische Ansicht der in Fig. 1, 4, 5d, 7, 9-13 gezeigten Vorrichtung zur vollkreisförmigen Anordnung im Mantelrohr, Kabelkanalrohr oder im Mauerdurchbruch. Die Vorrichtung besteht wie in Fig. 1, 4, 5d, 7, 9-13 aus einem vorkonfektionierten Flachschlauchkissen [1, 1', 6] mit werkseitig integrierter brandabschottender Füllung aus einem elastischen brandabschottenden Grundpolymer-Band [14'] oder einem Granulat [14"] und einem metallenen Druckluftventil [3, 3'] nach Fig. 6a mit kunststoffbeschichteter Ventilverlängerung [4, 4"]. Die Enden des Flach-schlauchkissens wurden mittels geeignetem Verfahren zu gewellten, waabenförmigen [5""] oder glatten [5, 5'] Verschlüssen scherfest [18] bis 5 bar Fülldruck verschlossen.
Zum druckgas- und wasserdichten Verschließen mit brandabschottender Funktion eines Mantelrohrs, Kabelkanalrohrs oder Mauerdurchbruchs wurde in der Mitte der Vorrichtung ein vorkonfektioniertes, nicht dauerhaft mit den Bauteilen verklebendes Abdichtband [2, 2', 7, 7'] und an den beiden Außenseiten ein brandabschottendes Abdichtband [14"'] um das Flachschlauchkissen [1, 1', 6] gewickelt. Die gas- und wasserdruckdichte Abdichtung des Mantel- oder Kabelkanalrohres wird durch Erhöhung des Fülldrucks durch Einbringen von Luft oder einer Flüssigkeit über das Druckluftventil [3, 3'] und Verpressen des Dichtbands [7, 2] oder der flexiblen Dichtsterne in den Zwickel erzielt. Durch anschließende Druckreduzierung befindet sich das Druck-Spannungs-Verformungsverhältnis des Flachschlauchkissens [1] im elastischen Bereich.

Fig. 16b zeigt eine perspektivische Ansicht der in Fig. 1-4, 5d gezeigten Vorrichtung im aufgeschnittenen Zustand zur längsförmigen Anwendung im Rechteck-Kabelkanal oder in Mauerdurchführungen mit verlegten Kabeln/ Medienrohren. Die Vorrichtung besteht wie in Fig. 1-5, 5d und 16a aus einem vorkonfektionierten Flachschlauchkissen [1,1',6] mit werkseitig integrierter brandabschottender Füllung [14',14"] und außenliegender brandabschottender Bandbewicklung [14'"'] und gas- und wasserdichter Abdichtband-bewicklung [2,2',7,7'] und einem oder zwei kunststoffbeschichteten metallenen Druckluftventilen [3, 3', 4, 4"] nach Fig. 6b an der Längsverschweißung [5"] der überlappend gefalteten Verbundfolie [1, 1', 6] wie in Fig. 5f dargestellt. Die Enden des Flachschlauchkissens wurden thermisch mittels geeignetem Verfahren zu gewellten, waabenförmigen [5""] oder glatten [5, 5'] Verbundfolienverschlüssen verschlossen.
Durch anschließende mechanische Metall- oder Kunststoffverpressung [5"'] der Verschlüsse [5, 5', 5""] wird die Scherfestigkeit [18] der Verschlüsse für einen erhöhten Fülldruck bei längsförmiger Anwendung erhöht.

Fig. 17 zeigt eine perspektivische Ansicht der in Fig. 2, 3, 4 und 16b rechteckig angeordneten Vorrichtung zur Abdichtung der im Kabelkanal [11] oder zwischen Trenn-/ Zwischenwänden verlegten Kabel und/oder Rohre [9]. Die Vorrichtung besteht wie in Fig. 2, 3, 4 und 16b beschriebenen vorkonfektionierten Flachschlauchkissen
[1, 1', 6] mit einem Druckluftventil [3, 3'] nach Fig. 6b, das mit einer kunststoffbeschichteten Ventilverlängerung [4,4"] an der Längsverschweißung [5"] versehen ist. Die Enden [5, 5', 5"', 5""] des Flachschlauchkissens wurden mittels geeignetem Verfahren zu Innenüberdruck-Scherfesten Verschlüssen [5"', 5""] verschlossen. Zum druckgas- und wasserdichten Verschließen eines Kabelkanals [11] wurde ein vorkonfektioniertes nicht dauerhaft mit den Bauteilen verklebendes Dichtband [7, 7',7"] um das Flachschlauchkissen [1, 1', 6] gewickelt.
Je nach Anwendungsbereich wird zur Abdichtung der im Kabelkanal oder zwischen Trenn-/Zwischenwänden [11] verlegten Kabel und/oder Rohre [9] ein zweigeteilter Dichtblock [15"] oder aus geschlitzten aneinandergereihten Einzelblöcken [16] mit Verankerungen an den äußeren Dichtblock [15']/ Einzelblockseiten [16'] und Verankerungen, Aussparungen an den inneren Dichtblockseiten [15"", 16"] und der äußeren Seite vom Kabel/Rohr, Blindstopfen [17] oder vom Kabel-/ Rohradapter [17'] eingelegt. Die zug-/ stauch- und brandbeständige 0,5 bar gas- oder wasserdichte Abschottung des Kabelkanals [11] wird durch Erhöhung des Innendrucks durch Einbringung von Luft, oder einer Flüssigkeit über das Druckluftventil [3, 3'] und Verpressen des Dichtbands [7] und des Dichtblocks [15, 16, 17] in den Zwickeln erzielt. Durch anschließende Druckreduzierung befindet sich das Druck-Spannungs-VerformungsVerhältnis des Flachschlauchkissens [1, 1', 6] im elastischen Bereich.

Fig. 18 zeigt eine perspektivische Ansicht der in Fig. 17 beschriebenen Abdichtvorrichtung, hergestellt aus einem zweigeteilten Dichtblock [15"] mit aneinander gereihten Einzelblöcken [16] in auseinandergezogem Zustand dargestellt, um die Lage der Verankerungen an den Ober- und Unterseiten [15"'] des Dichtblocks und Einzelblocks zu zeigen.

Fig. 19 zeigt eine perspektivische Ansicht des in Fig. 17 beschriebenen geschlitzten Kabel/ Rohradapters [17'] mit Verankerungen an der Außenseite [17"] zur Aufnahme von Zug- und Schubkräften.

Fig. 20 zeigt eine perspektivische Ansicht des in Fig. 17 beschriebenen Blindstopfens [17] mit Verankerungen an der Außenseite [17"] zur Verwendung als Abdichtelement bei unbelegten Dicht- oder Einzelblöcken.

## Patentansprüche

1. Vorrichtung zum gas- und druckwasserdichten Verschließen von Hohlräumen bei Mauerdurchbrüchen, (10). Mantelrohren (11), Kabelkanälen (11, 11', 11"), die mit Medienrohren, wie z.B. Gas, [Ab]Wasser, Fernwärme usw., oder Kanälen (9) belegt sind, wobei die Vorrichtung aus einem für den Anwendungszweck in der Länge (6) und Breite (1') abgelängten Flachschlauchkissen (1) besteht, das an der Längsseite (5") und den Querseiten druckfeste Verschlüsse (5, 5', 5"', 5"") aufweist und über mindestens ein kunststoffbeschichtetes, metallenes Ventil (3, 3') mit Ventilverlängerung (4, 4', 4" ) befüllt wird und zusätzlich außerhalb des Flachschlauchkissens (1) mit einem gas- und druckwasserdichten Abdichtband abgedichtet ist,
**gekennzeichnet durch**
eine zweilagige, kreisförmige Anordnung (13) des Flachschlauchkissens (1), wobei das Ventil (3', 3") innerhalb des Flachschlauchkissens über die gesamte Flachschlauchkissenlänge mit einem perforiertem Kunststoffschlauch (4') verbunden ist.

2. Vorrichtung nach Anspruch 1,
**dadurch gekennzeichnet,**
**dass** die Hohlräume mit glatten oder gewellten Medienrohren belegt sind.

3. Vorrichtung nach Anspruch 1 oder 2,
**dadurch gekennzeichnet,**
**dass** das Flachschlauchkissen (1) mit gasförmigen (8), pulverisierten oder flüssigen (8') oder flexibei aushärtenden oder auflösenden Medien (8") gefüllt wird.

4. Vorrichtung nach einem der vorhergehenden Ansprüche,
**dadurch gekennzeichnet,**
**dass** das Flachschlauchkissen (1, 1') in der Länge (6) dem Umfang des Mauerdurchbruchs (10), Mantelrohrs/Kabelkanals (11, 11') oder den Zwischenraum bei Stellwänden (11") entsprechend und in der Breite (1') in Abhängigkeit von der Größe des abzudichtenden Hohlraums (13) in Breiten bis 550mm hergestellt werden kann, um je nach dem Anwendungsfall mit einem geringen Fülldruck von 2,0-5,0 bar und einer wesentlich verminderten Querdruckbelastung des Medienrohrs (9) von 20 bis < 90 N/cm² eine Abdichtung des Hohlraumes zu erzielen, ohne die Fließeigenschaften der Medien infolge einer Einbeulung des Medienrohrs zu beeinflussen.

5. Vorrichtung nach einem der vorhergehenden Ansprüche,
**dadurch gekennzeichnet,**
**dass** die druckfesten Verschlüsse (5, 5') des Flachschlauchkissens standardmäßig eine glatte (5, 5') und für eine höhere Innenüberdruck-Scherbeständigkeit (18) eine wabenförmige oder gewellte Struktur (5"") besitzen

6. Vorrichtung nach einem der vorhergehenden Ansprüche,
**dadurch gekennzeichnet,**
**dass** das Ventil aus einem metallenen Druckluftventil (3, 3', 3") mit einer kunststoffbeschichteten, metallenen Ventilverlängerung (4, 4") besteht bzw. bestehen, wobei die Kunststoffbeschichtung aus einem dem Schlauchkissen gleichen Werkstoff, beispielsweise PE, PUR, PA oder einem dem Schweißverfahren gleichwertig geeigneten Werkstoff, versehen ist und dadurch eine erweiterte Brauchbarkeitsdauer der Vorrichtung durch Nachfüllung während der Wartungszyklen erreichbar ist.

7. Vorrichtung nach einem der vorhergehenden Ansprüche,
**dadurch gekennzeichnet,**
**dass** das Ventil (3, 3', 3") entsprechend dem Anwendungsbereich an der Quer-(5, 5') oder an der Längsseite (5") des Flachschlauchkissens (1, 1', 6) angeordnet und als PKW-, Motorrad-Druckluftventil (3) oder als Sonderventil (3', 3") ausgebildet ist und mit gasförmigen Füllmedien (8) oder pulverisierten oder flüssigen Füllmedien (8') befüllbar ist.

8. Vorrichtung nach den Ansprüchen 1 bis 6,
**dadurch gekennzeichnet,**
**dass** das Flachschlauchkissen (1, 1', 6) im Anwendungsbereich als Einzelelement in zwei Lagen kreisförmig im Umfang des Mauerdurchbruchs (10) oder Medienrohrs (11), Kanalrohrs (11,11') angeordnet ist, wobei sich das Ventil (3, 3', 3") an einem Ende (5, 5', 5"") des Flachschlauchkissens (1, 1', 6) befindet und durch die kunststoffbeschichtete metallene Ventilverfängerung (4, 4") ein in alle Richtungen biegsames Sonderventil (3, 3', 3") hergestellt ist, das im Zwischenraum der Abdichtung (13) geschützt eingelegt werden kann.

9. Vorrichtung nach einem der vorhergehenden Ansprüche,
**dadurch gekennzeichnet,**
**dass** das Flachschlauchkissen (1, 1', 6) für eine Abdichtung zur Befüllung mit pulverisierten oder flüssigen Medien (8') oder mit flexibel aushärtendem und/oder auflösendem Füllmaterial (8") zwei Ventile (3', 3") zur luftblasenfreie Befüllung des Flachschlauchkissens enthält.

10. Vorrichtung nach einem der Ansprüche 1 bis 5 und 8,
**dadurch gekennzeichnet,**
**dass** die Flachschlauchkissen (1, 1', 6) in Längs- oder Querrichtung zusätzlich ein elastisches, (nicht) dauerhaft verklebendes Dichtband mit Chemiefaser-Trägereinlage (7) in einer Wickelreihe oder aneinandergereihte Dichtbänder (7") aufweist.

11. Vorrichtung nach einem der Ansprüche 1 bis 5 und 8 bis 10,
**dadurch gekennzeichnet,**
**dass** beim Abdichten von Mauerdurchbrüchen (10), Mantelrohren (11), Kabelkanal (11, 11', 11 "), Medienrohren (9) und Kabelbündeln (12) im Bereich der Berührungsstellen von Mauerdurchbrüchen (10), Flachschlauchkissen (1, 1'), Kabelkanal (11, 11', 11") oder Mehrfach-Medienrohren/ Mehrfachkabeln (12) eine Dichtband-Umwicklung (7, 7", 7"') mit/ohne Trennfolie eingesetzt ist und sich im Zwickel ein dauerplastischer Dichtstern (15, 15'), Dichtblock (15", 15"', 15""), Dichtmodul (16, 16') oder eine Dichtbandumwickelung (7) befindet.

12. Vorrichtung nach Anspruch 10 oder 11,
**dadurch gekennzeichnet,**
**dass** beim Abdichtband (7) zum gas- und druckwasserdichten Abdichten unter Druck je nach Anwendungsbereich die Abdichtbandumwicklung (7', 7") aus einem im Temperaturbereich von -30°C bis +70°C und bis 100 N/cm² druckbeständigen dauerelastischen, mit Füllstoffen, die aus Polymeren, Quarzsand oder Schiefermehl bestehen, modifizierten Vaseline-Petrolatgemisch oder einem Petrolat- oder Bitumengemisch oder aus Gelmassen oder einer geschlossenzelligen PUR-Hartschäumung besteht, die eine Dicke von etwa 1,0 bis 3mm besitzt und eine Breite von 40-80% der Breite des Flachschlauchkissens (1) bei teilflächiger (7) oder vollflächiger (7") Bedeckung des Flachschlauchkissens aufweist.

13. Vorrichtung nach einem der Ansprüche 10 bis 12,
**dadurch gekennzeichnet,**
**dass** zum gas-, druckwasserdichten Abdichten mit brandabschottender Funktion, das in der Mitte liegende Abdichtband (7) und die Abdichtbandumwicklung (7', 7") für Medienrohr und Kabel aus einem bis 100 N/cm² druckbeständigen, dauerelastischen Gewebeband aus einer unverrottbaren Chemiefaser-Trägereinlage (7) besteht, das beidseitig mit einem durch Füllstoffe aus Polymeren, Quarzsand oder Schiefermehl modifzierten Vaseline-Petrolat-gemisch oder einer geschlossenzelligen PUR-Hartschäumung auf der Chemienfaser-Trägereinlage (7) besteht, die eine Dicke von 2,0 bis etwa 3,0mm aufweist und in der Breite zwischen 20-40% der Fläche des Flachschlauchkissens (1) und der Medienrohre/Kabel bedecken und die verbleibenden Randflächen mit brandabschottenden Bändern (14') bedeckt sind.

14. Vorrichtung nach Anspruch 12 und 13,
**dadurch gekennzeichnet,**
**dass** die Abdichtbänder (7, 7', 7",7"') ein- oder beidseitig mit einer weichen, dehnbaren Trennfolie umhüllt sind.

15. Vorrichtung nach einem der Ansprüche 10 bis 12 und 14,
**dadurch gekennzeichnet,**
**dass** die, aus einer unverrottbaren Chemiefaser-Trägereinlage bestehenden Abdichtbänder (6) aus einem in Längs- und Querrichtung dehnbaren Werkstoff, wie Baumwolle, Hanf, PP-Polyesterfilamenten usw., hergestellt sind.

16. Vorrichtung nach einem der Ansprüche 10 bis 13,
**dadurch gekennzeichnet,**
**dass** die Abdichtbänder (6) aus einem Band aus geschlossenzelligen Hartschaumstoff, vorzugsweise PUR oder Silikon, mit einseitiger Kleberbeschichtung ausgebildet sind.

17. Vorrichtung nach einem der vorhergehenden Ansprüche,
**gekennzeichnet durch**
eine Belegung mit Mehrfach-Medienrohren/Mehrfach-Kabeln (12), wobei die Vorrichtung einen Dichtbandwickel (7'") oder einen Dichtstem/Dichtblock (15, 16), der zwischen die einzelnen, abzudichtenden Kabel oder Rohre eingebracht wird, umfasst.

18. Vorrichtung nach Anspruch 17,
**dadurch gekennzeichnet,**
**dass** der Dichtstern (15), Dichtblock (15", 15"', 15""), Dichtblock-Einzelmodul (16, 16', 16") zweigeteilt und ungeschlossen (15') oder geschlossen und geschlitzt aus einem in Querrichtung veränderbaren, halogenfreiem, flammwidrigem Werkstoff, wie der Hartschaumstoff PUR-Polyurethan, ausgebildet ist.

19. Vorrichtung nach einem der vorhergehenden Ansprüche,
**gekennzeichnet durch**
eine ggfs. integrierte, brandabschottende Füllung (14', 14") des Flachschlauchkissens zum zusätzlichen brandabschottenden Verschließen von Hohlräumen.

20. Vorrichtung nach einem der vorhergehenden Ansprüche,
**dadurch gekennzeichnet,**
**dass** die Vorrichtung außerhalb des Flachschlauchkissens (1) zusätzlich mit einem brandabschottenden Band (14, 14', 14") abgedichtet ist, zum zusätzlichen brandabschottenden Verschließen von Hohlräumen.

21. Vorrichtung nach Anspruch 19 oder 20,
**dadurch gekennzeichnet,**
**dass** sich ein brandabschottendes Medium (14) vor dem Flachschlauchkissen oder im Hohlraum der Mauerdurchführung (13) hinter oder zwischen zwei Flachschlauchkissen (1, 1') in einem Schlauchband (14) befindet und als brandabschottendes, elastisches Band (14') oder brandabschottendes Granulat (14") ausgebildet ist.

22. Vorrichtung nach Anspruch 19, 20 oder 21,
**dadurch gekennzeichnet,**
**dass** das/die brandabschottende(n) Medium (Medien) innerhalb und außerhalb des Flachschlauchkissens (14'), das um das Medienrohr/Kabel liegende brandabschottende Abdichtband (7) aus einem weichen, elastischen Band oder im Schlauch (14') aus einem Granulat der Körnung 2-3mm und die Dichtsterne (15, 15'), Dichtblöcke (15", 15"', 15""), Dichtblock-Einzelmodul (16, 16', 16") sowie die Blind- und Rohrstopfen (17, 17') aus einem Extrusionsprofil aus einem Werkstoff besteht, das aus einem Grundpolymer und blähfähigen Additiven gebildet ist.

## Claims

1. An apparatus for gas- and pressurized-watertight closure of hollow spaces in wall lead-throughs (10), insulated pipes (11), cable conduits (11, 11', 11 ") which are occupied by pipes carrying various media, such as gas, (waste) water, distance heat, etc., or conduits (9), the apparatus comprising a flat tubular pad (1) cut to a length (6) and width (1') for the intended use, which on its longitudinal side (5") and transverse sides has pressuretight closures (5, 5', 5"', 5"") and is filled via at least one plastic-coated metal valve (3, 3') with a valve extension (4, 4', 4") and is additionally sealed off outside the flat tubular pad (1) with a gas- and pressurized-watertight sealing tape,
**characterized by**
a two-ply circular arrangement (13) of the flat tubular pad (1), in which, inside the flat tubular pad, over the entire length of the flat tubular pad, the valve (3', 3") communicates with a perforated plastic tube (4').

2. The apparatus according to claim 1,
**characterized in that**
the hollow spaces are occupied by smooth or corrugated media-carrying pipes.

3. The apparatus according to claim 1 or 2,
**characterized in that**
the flat tubular pad (1) is filled with gaseous (8), powdered or liquid (8') or flexibly hardening or dissolving media (8").

4. The apparatus according to one of the foregoing claims,
**characterized in that**
the flat tubular pad (1, 1') can be produced in widths of up to 550 mm in length (6) to suit the circumference of the wall opening (10) or of the insulated pipe/cable conduit (11, 11') or to suit the interstice in the case of adjustable walls (11") and in width (1') as a function of the size of the hollow space (13) to be sealed off, in order, depending on the intended use, with a low fill pressure of 2.0-5.0 bar and a substantially reduced transverse pressure load on the media-carrying pipe (9) of from 20 to < 90 N/cm², to attain sealing off of the hollow space without affecting the flow properties of the media as a consequence of denting of the media-carrying pipe.

5. The apparatus according to one of the foregoing claims,
**characterized in that**
the pressuretight closures (5, 5") of the flat tubular pad, in a standard version, have a smooth structure (5, 5'), and for a higher internal overpressure shear strength (18), they have a honeycomblike or corrugated structure (5"").

6. The apparatus according to one of the foregoing claims,
**characterized in that**
the valve comprises a metal compressed-air valve (3, 3', 3") with a plastic-coated metal valve extension (4, 4"), and the plastic coating comprises a material that is the same as the tubular pad, such as PE, PU, PA or a material equally well suited to the welding process, and as a result greater durability of the apparatus is attained by refilling during the maintenance cycles.

7. The apparatus according to one of the foregoing claims,
**characterized in that**
the valve (3, 3', 3") is disposed on the transverse side (5, 5') or on the longitudinal side (5"') of the flat tubular pad (1, 1', 6), depending on the field of use, and is embodied as a passenger car or motorcycle compressed-air valve (3) or as a special valve (3', 3") and is capable of being filled with gaseous filling media (8) or powdered or liquid filling media (8').

8. The apparatus according to claims 1-6,
**characterized in that**
the flat tubular pad (1, 1', 6), in the field of use as a single element, is disposed in two plies in a circle in the circumference of the wall lead-through (10) or media-carrying pipe (11) or sewer pipe (11, 11'), and the valve (3, 3', 3") is located on one end (5, 5', 5"") of the flat tubular pad (1, 1', 6), and by means of the plastic-coated metal valve extension (4, 4"), a special valve (3, 3', 3") that is bendable in all directions is produced, which can be laid in protected fashion in the interstice in the sealing means (13).

9. The apparatus according to one of the foregoing claims,
**characterized in that**
the flat tubular pad (1, 1', 6), for a sealing means for filling with powdered or liquid media (8') or with flexibly hardening and/or dissolving filling material (8"), includes two valves (3', 3") for air-bubble-free filling of the flat tubular pad.

10. The apparatus according to one of claims 1-5 and 8,
**characterized in that**
the flat tubular pad (1, 1', 6) in the longitudinal or transverse direction additionally has an elastic (non-) permanently adhesive sealing tape with a synthetic fiber substrate inlay (7) in a winding row or in sealing tapes (7") arranged in side-by-side rows.

11. The apparatus according to one of claims 1-5 and 8-10,
**characterized in that**
in the sealing of wall lead-throughs (10), insulated pipes (11), cable conduit (11, 11', 11 "), media-carrying pipes (9) and bundles of cables (12), a sealing tape wrapping (7, 7", 7"') with or without separating film is inserted in the vicinity of the contact points of wall lead-throughs (10), flat tubular pads (1, 1'), cable conduit (11, 11', 11") or multiple insulated pipes/multiple cables (12), and a permanently plastic sealing star (15, 15'), sealing block (15", 15"', 15""), sealing module (16, 16') or sealing tape wrapping (7) is located in the nip.

12. The apparatus according to claim 10 or 11,
**characterized in that**
in the sealing tape (7) for gastight and pressurized-watertight sealing under pressure, the sealing tape wrapping (7', 7"), depending on the field of use, comprises a modified vaseline-petrolatum mixture or a petrolatum or asphalt mixture or gel compositions or a closed-cell hard PUR foam which in the temperature range from -30°C to +70°C is permanently elastic and pressure-resistant up to 100 N/cm² and has fillers that comprise polymers, quartz sand, or powdered slate, and which has a thickness of approximately 1.0 to 3 mm and a width of from 40 to 80% of the width of the flat tubular pad (1), given a partial-surface (7) or full-surface (7") covering of the flat tubular pad.

13. The apparatus according to one of claims 10-12,
**characterized in that**
for gastight and pressurized-watertight sealing with a fireproofing function, the sealing tape (7) located in the middle and the sealing tape wrapping (7', 7") for media-carrying pipe and cables comprise a permanently elastic woven-fabric tape that is pressure-resistant up to 100 N/cm² and comprises a rotproof synthetic fiber substrate inlay (7) and that on both sides comprises a vaseline-petrolatum mixture, modified with fillers of polymer, quartz sand or powdered slate, or a closed-cell hard PUR foam on the synthetic fiber substrate inlay (7), the inlay having a thickness of from 2.0 to approximately 3.0 mm, and in width they cover between 20 and 40% of the surface area of the flat tubular pad (1) and of the media-carrying pipes/cables, and the remaining peripheral surfaces are covered with fireproofing tapes (14').

14. The apparatus according to claims 12 and 13,
**characterized in that**
the sealing tapes (7, 7', 7", 7"') are enveloped on one or both sides by a soft, stretchable separating film.

15. The apparatus according to one of claims 10-12 and 14,
**characterized in that**
the sealing tapes (6) comprising a rotproof synthetic fiber substrate inlay are made from a material that is stretchable in the longitudinal and transverse directions, such as cotton, hemp, PP polyester filaments, etc.

16. The apparatus according to one of claims 10-13,
**characterized in that**
the sealing tapes (6) are embodied of a strip of closed-cell hard foam, preferably PUR or silicone, with adhesive coating on one side.

17. The apparatus according to one of the foregoing claims,
**characterized by**
being occupied by multiple media-carrying pipes/multiple cables (12), and the apparatus includes a sealing tape wrapping (7"') or a sealing star/sealing block (15, 16), which is placed between the individual cables or pipes that are to be sealed off.

18. The apparatus according to claim 17,
**characterized in that**
the sealing star (15), sealing block (15", 15"', 15""), or individual sealing block module (16, 16', 16"), split in two and unclosed (15') or closed and slit, is embodied of a transversely variable, halide-free, flame-resistant material, such as PUR polyurethane hard foam.

19. The apparatus according to one of the foregoing claims,
**characterized by**
an optionally integrated fireproofing filling (14', 14") of the flat tubular pad, for additional fireproofing closure of hollow spaces.

20. The apparatus according to one of the foregoing claims,
**characterized in that**
the apparatus is additionally sealed off, outside the flat tubular pad (1), by a fireproofing tape (14, 14', 14"), for additional fireproofing closure of hollow spaces.

21. The apparatus according to claim 19 or 20,
**characterized in that**
a fireproofing medium (14) is located ahead of the flat tubular pad or in the hollow space in the wall lead-through (13) behind or between two flat tubular pads (1, 1') in a tubular tape (14) and is embodied as a fireproofing elastic tape (14') or as a fireproofing granulate (14").

22. The apparatus according to claim 19, 20 or 21,
**characterized in that**
the fireproofing medium or media inside and outside the flat tubular pad (14'), the fireproofing sealing tape (7) located around the media-carrying pipe/cable comprises a soft elastic tape or in the tube (14') comprises a granulate with a particle size of 2 to 3 mm, and the sealing stars (15, 15'), sealing blocks (15", 15"', 15"'), the individual sealing block module (16, 16', 16"), and the blind plugs and pipe plugs (17, 17') comprise an extruded profile section of a material which is formed of a basic polymer and expandable additives.

## Revendications

1. Dispositif de fermeture étanche aux gaz et à l'eau sous pression et/ou coupe-feu de cavités dans les percées murales (10), tubes d'enveloppe (11), conduits de câbles (11, 11', 11") qui sont garnis de tubes de fluide comme par exemple gaz, eau [résiduaire], chauffage urbain, etc. ou de conduits (9), le dispositif étant constitué d'un coussin en forme de tuyau plat (1) mis à dimension en longueur (6) et largeur (1') pour l'application prévue, qui présente des fermetures (5, 5', 5"', 5"") résistantes à la pression sur le côté longitudinal (5") et les côtés transversaux et qui est rempli au moyen d'au moins une valve (3, 3') métallique plastifiée avec rallonge de vanne (4, 4', 4") et rendu étanche en plus à l'extérieur du coussin en forme de tuyau plat (1) par une bande d'étanchéité étanche aux gaz et à l'eau sous pression,
**caractérisé par**
un agencement (13) à deux couches, circulaire, du coussin en forme de tuyau plat (1), la valve (3', 3") étant reliée à l'intérieur du coussin en forme de tuyau plat, sur toute la longueur du coussin en forme de tuyau plat, à un tuyau en plastique (4') perforé.

2. Dispositif selon la revendication 1,
**caractérisé en ce**
**que** les cavités sont garnies de tubes de fluide lisses ou ondulés.

3. Dispositif selon la revendication 1 ou 2,
**caractérisé en ce**
**que** le coussin en forme de tuyau plat (1) est rempli de fluides gazeux (8), pulvérisés ou liquides (8') ou pouvant durcir ou se dissoudre de manière flexible (8").

4. Dispositif selon une des revendications précédentes,
**caractérisé en ce**
**que** le coussin en forme de tuyau plat (1, 1') peut être fabriqué dans la longueur (6) en fonction de la circonférence de la percée murale (10), du tube d'enveloppe/conduit de câbles (11, 11') ou de l'espace intermédiaire dans le cas de cloisons de séparation (11") et dans la largeur (1') en fonction de la taille de la cavité (13) à rendre étanche, dans des largeurs allant jusqu'à 550 mm pour, selon le cas d'application, obtenir une étanchéité de la cavité avec une faible pression de remplissage de 2,0 à 5,0 bars et une contrainte de pression transversale sensiblement réduite du tube de fluide (9) de 20 à ≤ 90 N/cm², sans influencer les propriétés d'écoulement des fluides par suite d'une bosselure du tube de fluide.

5. Dispositif selon une des revendications précédentes,
**caractérisé en ce**
**que** les fermetures (5, 5') résistantes à la pression du coussin en forme de tuyau plat possèdent en standard une structure lisse (5, 5') et pour une résistance au cisaillement par surpression interne (18) plus élevée, une structure alvéolaire ou ondulée (5"").

6. Dispositif selon une des revendications précédentes,
**caractérisé en ce**
**que** la valve est constituée d'une valve pneumatique métallique (3, 3', 3") avec une rallonge de valve (4, 4") métallique plastifiée, le revêtement plastique étant dans un matériau identique à celui du coussin en forme de tuyau, par exemple en PE, PUR, PA ou un matériau équivalent pour le procédé de soudage, ce qui permet d'atteindre une durée de vie plus longue du dispositif par recharge pendant les cycles de maintenance.

7. Dispositif selon une des revendications précédentes,
**caractérisé en ce**
**que** la valve (3, 3', 3") est disposée, selon le domaine d'application, sur le côté transversal (5, 5') ou sur le côté longitudinal (5") du coussin en forme de tuyau plat (1, 1', 6) et réalisée sous la forme d'une valve pneumatique de voiture, de moto (3) ou d'une valve spéciale (3', 3") et peut être remplie de fluides de remplissage gazeux (8) ou pulvérisés ou liquides (8').

8. Dispositif selon les revendications 1 à 6,
**caractérisé en ce**
**que** le coussin en forme de tuyau plat (1, 1', 6) est disposé, dans le domaine d'application en tant qu'élément individuel, en deux couches en forme de cercle dans la circonférence de la percée murale (10), du tube de fluide (11) ou tube de conduit (11, 11'), la valve (3, 3', 3") se trouvant à une extrémité (5, 5', 5"") du coussin en forme de tuyau plat (1, 1', 6) et une valve spéciale (3, 3', 3") flexible dans toutes les directions, qui peut être placée à l'abri dans l'espace intermédiaire de l'étanchéité (13), étant réalisée par la rallonge de valve métallique plastifiée (4, 4").

9. Dispositif selon une des revendications précédentes,
**caractérisé en ce**
**que** le coussin en forme de tuyau plat (1, 1', 6) contient, pour une étanchéité destinée à être remplie de fluides pulvérisés ou liquides (8') ou d'une matière de remplissage pouvant durcir et/ou se dissoudre de manière flexible (8"), deux valves (3', 3") pour le remplissage sans bulles d'air du coussin en forme de tuyau plat.

10. Dispositif selon une des revendications 1 à 5 et 8,
**caractérisé en ce**
**que** le coussin en forme de tuyau plat (1, 1', 6) présente en outre en direction longitudinale ou transversale une bande d'étanchéité élastique, adhésive de manière (non) durable, avec une armature en fibres synthétiques (7) en une rangée d'enroulement ou des bandes d'étanchéité juxtaposées (7").

11. Dispositif selon une des revendications 1 à 5 et 8 à 10,
**caractérisé en ce**
**que** lors de l'étanchéification de percées murales (10), tubes d'enveloppe (11), conduits de câbles (11, 11', 11"), tubes de fluide (9) et faisceaux de câbles (12), un enroulement de bande d'étanchéité (7, 7", 7"') avec/sans feuille de séparation est utilisé au niveau des points de contact de percées murales (10), du coussin en forme de tuyau plat (1, 1'), de conduits de câbles (11, 11', 11") ou de tubes de fluide multiples/câbles multiples (12), et une étoile d'étanchéité à plasticité permanente (15, 15'), un bloc d'étanchéité (15", 15"', 15""), un module d'étanchéité (16, 16') ou un enroulement de bande d'étanchéité (7) se trouve dans le coin.

12. Dispositif selon la revendication 10 ou 11,
**caractérisé en ce**
**que** dans le cas de la bande d'étanchéité (7) pour l'obturation étanche aux gaz et à l'eau sous pression, selon le domaine d'application, l'enroulement de bande d'étanchéité (7', 7") se compose d'un mélange de vaseline-petrolatum à élasticité permanente dans la plage de température de -30 °C à +70 °C et résistant à la pression jusqu'à 100 N/cm², modifié par des charges de polymères, sable quartzeux ou farine de schiste ou d'un mélange petrolatum-bitume ou de gels ou d'une mousse dure de PUR à cellules fermées qui possède une épaisseur d'environ 1,0 à 3 mm et présente une largeur de 40 à 80 % de la largeur du coussin en forme de tuyau plat (1) en recouvrant partiellement (7) ou totalement (7") la surface du coussin en forme de tuyau plat.

13. Dispositif selon une des revendications 10 à 12,
**caractérisé en ce**
**que** pour l'obturation étanche aux gaz et à l'eau sous pression avec fonction coupe-feu, la bande d'étanchéité (7) située au milieu et l'enroulement de bande d'étanchéité (7', 7") pour tube de fluide et câble se composent d'une bande textile à élasticité permanente, résistante à la pression jusqu'à 100 N/cm², réalisée à partir d'une armature en fibres synthétiques (7) imputrescible, qui se compose des deux côtés d'un mélange de vaseline-petrolatum modifié par des charges de polymères, sable quartzeux ou farine de schiste ou d'une mousse dure de PUR à cellules fermées sur l'armature en fibres synthétiques (7), qui présente une épaisseur de 2,0 à environ 3,0 mm et recouvre dans la largeur entre 20 et 40 % de la surface du coussin en forme de tuyau plat (1) et des tubes de fluide/câbles, les surfaces de bord restantes étant recouvertes de bandes coupe-feu (14').

14. Dispositif selon les revendications 12 et 13,
**caractérisé en ce**
**que** les bandes d'étanchéité (7, 7', 7",7"') sont enveloppées d'un côté ou des deux côtés d'une feuille de séparation souple extensible.

15. Dispositif selon une des revendications 10 à 12 et 14,
**caractérisé en ce**
**que** les bandes d'étanchéité (6) composées d'une armature en fibres synthétiques imputrescible sont fabriquées à partir d'un matériau extensible en direction longitudinale et transversale, tel que coton, chanvre, filaments de polyester-polypropylène, etc.

16. Dispositif selon une des revendications 10 à 13,
**caractérisé en ce**
**que** les bandes d'étanchéité (6) sont réalisées à partir d'une bande de mousse dure à cellules fermées, de préférence en PUR ou silicone, avec revêtement adhésif d'un côté.

17. Dispositif selon une des revendications précédentes,
**caractérisé par**
un garnissage avec des tubes de fluide multiples/câbles multiples (12), le dispositif comprenant un enroulement de bande d'étanchéité (7"') ou une étoile d'étanchéité/un bloc d'étanchéité (15, 16) qui est introduit entre les différents câbles ou tubes à rendre étanches.

18. Dispositif selon la revendication 17,
**caractérisé en ce**
**que** l'étoile d'étanchéité (15), le bloc d'étanchéité (15", 15"', 15""), le module individuel de bloc d'étanchéité (16, 16', 16") est réalisé(e) en deux parties et non fermé (15') ou fermé et fendu dans un matériau modifiable en direction transversale, sans halogènes, ininflammable, comme la mousse dure de PUR (polyuréthane).

19. Dispositif selon une des revendications précédentes,
**caractérisé par**
un remplissage coupe-feu (14', 14"), le cas échéant intégré, du coussin en forme de tuyau plat pour la fermeture coupe-feu supplémentaire de cavités.

20. Dispositif selon une des revendications précédentes,
**caractérisé en ce**
**que** le dispositif est également rendu étanche à l'extérieur du coussin en forme de tuyau plat (1) par une bande coupe-feu (14, 14', 14") pour la fermeture coupe-feu supplémentaire de cavités.

21. Dispositif selon la revendication 19 ou 20,
**caractérisé en ce**
**qu'**un agent coupe-feu (14) se trouve devant le coussin en forme de tuyau plat ou dans la cavité de la traversée de mur (13), derrière ou entre deux coussins en forme de tuyau plat (1, 1') dans une bande tubulaire (14) et est réalisé sous la forme d'une bande élastique coupe-feu (14') ou d'un granulat coupe-feu (14").

22. Dispositif selon la revendication 19, 20 ou 21,
**caractérisé en ce**
**que** le ou les agent(s) coupe-feu à l'intérieur et à l'extérieur du coussin en forme de tuyau plat (14'), la bande d'étanchéité coupe-feu (7) située autour du tube de fluide/câble constituée d'une bande élastique souple ou, dans le tuyau (14'), d'un granulat de granulométrie 2 à 3 mm et les étoiles d'étanchéité (15, 15'), blocs d'étanchéité (15", 15"', 15""), module individuel de bloc d'étanchéité (16, 16', 16") ainsi que les bouchons d'obturation et de tube (17, 17') sont réalisés à partir d'un profilé extrudé dans un matériau qui est formé d'un polymère de base et d'additifs expansibles.
